# FASCICULE DE BREVET EUROPEEN

(11) **EP 1 628 747 B1**
(45) Date de publication et mention de la délivrance du brevet: **23.04.2008**
(21) Numéro de dépôt: 04742789.3
(22) Date de dépôt: 19.05.2004
(51) Int. Cl.: B01D 63/08, B01D 65/10

(54) **DISPOSITIF DE SEPARATION PAR UNE PLURALITE DE MEMBRANES DE FILTRATION D'UN FLUIDE EN AU MOINS DEUX FRACTIONS ET SON UTILISATION**
APPARAT ZUR TRENNUNG EINES FLUIDES IN MINDESTENS ZWEI FRAKTIONEN MITTELS EINER VIELZAHL VON MEMBRANEN SOWIE SEINE VERWENDUNG
DEVICE FOR THE SEPARATION OF A FLUID INTO AT LEAST TWO FRACTIONS, USING A PLURALITY OF MEMBRANE FILTERS, AND USE THEREOF

(30) Priorité: 21.05.2003 FR 0306105
(43) Date de publication de la demande: 01.03.2006
(73) Titulaire: APPLEXION, 78680 Epone (FR)
(72) Inventeur: DE BIRAN, Olivier, F-69250 Fleurieu Sur Saone (FR); WALLART, Alain, F-42800 Saint-Martin La Plaine (FR); CASTELAS, Bernard, 69250 Montanay (FR); FISHINGER, Michael, Rahway, NJ 07065 (US)
(74) Mandataire: Hirsch & Associés
(86) Numéro de dépôt international: PCT/FR2004/001246
(87) Numéro de publication internationale: WO 2004/103533

(56) Documents cités:
- WO-A-02/076529
- US-A- 4 272 373
- US-A- 4 786 411
- PATENT ABSTRACTS OF JAPAN vol. 2000, no. 13, 5 février 2001 (2001-02-05) -& JP 2000 301134 A (KOSU:KK), 31 octobre 2000 (2000-10-31)

## Description

L'invention concerne un dispositif de séparation d'un fluide au moins en deux fractions.

L'invention s'applique en particulier à la séparation de peinture et de solvant, dans des bacs de peinture ou de récupération d'eau de rinçage de carrosseries de véhicules automobiles, dans une installation de peinture par cataphorèse.

De nombreux fluides et en particulier de nombreux liquides utilisés dans des conditions industrielles nécessitent des opérations de séparation, par exemple pour être régénérés et recyclés dans un processus industriel dans lequel ils sont utilisés.

Dans certains cas, l'une des fractions séparées du fluide est éliminée, l'autre fraction étant réutilisée et, dans d'autres cas, les deux fractions obtenues par la séparation sont réutilisées.

Par exemple, dans le cas des installations de peinture par électrophorèse ou cataphorèse de carrosseries de véhicule automobile, cette opération visant généralement à réaliser une sous-couche anti-corrosion sur la carrosserie, les opérations de séparation peuvent être réalisées sur le bain de peinture dans lequel on plonge les carrosseries ou sur l'eau récupérée après rinçage de la carrosserie. On récupère, dans les deux cas, une première fraction constituée par le solvant de la peinture, c'est-à-dire en général un mélange d'eau déminéralisée et de solvants organiques pouvant contenir également des sels et d'autres substances. Cette première fraction peut être réutilisée pour le rinçage des carrosseries. Une seconde fraction récupérée qui est constituée par la peinture peut être recyclée dans le bac contenant le bain de peinture.

Dans d'autres applications, dans le domaine de l'industrie automobile et plus généralement dans les industries mécaniques ou de traitements de surface, on peut être amené à effectuer la séparation de substances contenues dans des huiles synthétiques ou des eaux de rinçage d'objets industriels, après dégraissage, phosphatation et peinture ou encore la récupération de peinture hydrodiluable.

Dans le domaine de la préservation de l'environnement, il peut être nécessaire également de réaliser des opérations de séparation, par exemple pour le traitement d'huiles de coupe, d'effluents biodégradables ou d'effluents non biodégradables.

Les dispositifs de séparation utilisés industriellement comportent généralement une membrane de filtration avec laquelle le fluide sur lequel on veut réaliser l'opération de séparation est mis en contact, de manière qu'une partie au moins du fluide traverse la membrane de filtration.

On peut réaliser une filtration en faisant traverser la membrane par une première fraction du fluide, une seconde fraction contenue dans le fluide sous forme homogène ou inhomogène étant arrêtée par la membrane de filtration dont les pores permettent la traversée par la première fraction du fluide.

Un procédé de filtration usuel dans lequel le fluide est entraîné à travers la membrane par gravité ou par différence de pression présente l'inconvénient d'entraîner un colmatage rapide de la membrane de filtration, du fait que les particules de la fraction du fluide retenue par la membrane sont plaquées contre la surface de la membrane et ont tendance à se fixer sur la surface de la membrane ou dans les pores traversant la membrane.

Il est très souvent préférable de recourir à un procédé de séparation avec circulation tangentielle du fluide au contact de la membrane, tel que l'ultrafiltration mettant en oeuvre une membrane dont les pores ont une dimension nanométrique. Pour réaliser la séparation, on met le fluide en circulation au contact d'une surface de la membrane suivant une direction tangentielle. Le fluide produit ainsi un balayage continu de la membrane, de sorte que les particules qui ne peuvent traverser la membrane d'ultrafiltration sont entraînées par le fluide et n'ont donc pas tendance à s'accumuler sur là surface de la membrane d'ultrafiltration.

On crée de part et d'autre de la membrane une différence de pression qui peut être de l'ordre de quelques bars qui assure le passage d'une fraction du fluide à travers les pores de la membrane, cette fraction du fluide étant appelée perméat.

L'autre fraction du fluide, appelée rétentat, qui ne peut traverser la membrane d'ultrafiltration à travers les pores de cette membrane circule au contact de la surface de la membrane d'ultrafiltration dans une direction tangentielle pour être récupérée au voisinage d'une extrémité de la membrane.

Dans le cas de la séparation de solvant et de peinture, le solvant constitue le perméat et la peinture, le rétentat.

On connaît des dispositifs de séparation par ultrafiltration qui sont constitués par des modules dans lesquels les membranes d'ultrafiltration sont enroulées sur elles-mêmes avec interposition d'une grille entre les enroulements successifs de la membrane. Dans de tels modules, appelés modules spirales, le fluide en circulation est ralenti par la grille d'espacement et en outre, les particules qui peuvent être transportées par le rétentat sont susceptibles de colmater les grilles.

On a proposé des modules de séparation de fluide par ultrafiltration dans lesquels le fluide et le rétentat, circulant de manière tangentielle par rapport à la membrane d'ultrafiltration, ne sont ralentis par aucun élément intercalé entre les membranes.

De tels modules de séparation par ultrafiltration peuvent comporter en particulier des plaques porte-membranes planes ayant deux faces opposées sur chacune desquelles est fixée une membrane d'ultrafiltration. Généralement, la membrane d'ultrafiltration est rapportée sur une partie de la surface de la plaque porte-membranes comportant des moyens de guidage de fluide, par exemple des nervures délimitant entre elles des rainures pour le drainage du perméat traversant la membrane d'ultrafiltration vers des canaux d'évacuation qui peuvent être prévus dans une partie latérale de la plaque porte-membranes et l'obtention de turbulences dans l'écoulement du fluide. Chacune des membranes délimite, avec la partie de la plaque porte-membranes sur laquelle elle est rapportée et fixée, un espace de récupération de perméat dans lequel le perméat est entraîné vers les canaux d'évacuation, à l'intérieur des rainures.

Les plaques porte-membranes constituant un module d'ultrafiltration sont rapportées l'une contre l'autre avec interposition d'un joint entre les parties périphériques de deux plaques successives. Le joint assure la fermeture étanche vers l'extérieur du module d'un espace de réception et de circulation de fluide, l'espace de réception du fluide étant délimité à l'intérieur du module, par deux membranes d'ultrafiltration en vis-à-vis l'une de l'autre et fixées sur deux faces en vis-à-vis de deux plaques porte-membranes adjacentes.

Les joints périphériques interposés entre deux plaques porte-membranes successives assurent également le maintien d'un écartement entre les plaques porte-membranes et entre les membranes en vis-à-vis qui est nécessaire pour assurer le passage du fluide à filtrer en circulation entre les deux membranes en vis-à-vis, à l'intérieur de l'espace de réception et de circulation. Des moyens d'alimentation des espaces de réception et de circulation de fluide sont prévus à l'une des extrémités des plaques porte-membranes et des moyens de récupération du rétentat sont prévus aux extrémités opposées des plaques porte-membranes. Pendant la circulation du fluide dans les espaces de réception et de circulation entre les membranes, la première fraction du fluide constituant le perméat traverse les membranes, de part et d'autre de l'espace de réception et de circulation, pour pénétrer dans les espaces de récupération de perméat délimités par chacune des membranes. Le fluide circulant dans les espaces de réception et de circulation séparé de la première fraction constituant le perméat, par exemple un solvant dans le cas d'un mélange de solvant et de peinture, constitue le rétentat qui est constitué par exemple par la peinture dans le cas envisagé ci-dessus.

Le perméat pénétrant dans les espaces de récupération est drainé par les rainures des plaques porte-membranes pour parvenir à des moyens de récupération communiquant avec des moyens d'évacuation du perméat qui sont raccordés au module d'ultrafiltration.

A ses extrémités, c'est-à-dire au niveau de la première et de la dernière plaque de l'empilement du module, celui-ci est fermé par des plaques rigides ou contentions qui sont rapportées contre la première et la dernière plaques du module avec interposition d'un joint. L'alimentation en fluide sur lequel on réalise la séparation et la récupération du perméat et du rétentat peut être réalisée au niveau des contentions.

Des tirants assurent l'assemblage avec serrage l'une contre l'autre par l'intermédiaire des joints, des plaques porte-membranes, entre les deux contentions.

En outre, un dispositif ou module de séparation peut comporter plusieurs sous-ensembles successifs séparés l'un de l'autre par des plaques séparatrices, les différents modules successifs étant intercalés entre deux plaques de contentions aux extrémités du dispositif.

A l'intérieur d'un sous-ensemble d'un module, entre deux plaques séparatrices ou entre une plaque de contention et une plaque séparatrice, le fluide est distribué dans les différents espaces de réception et de circulation successifs et le rétentat est récupéré à la sortie des espaces de circulation puis collecté à la sortie du sous-ensemble pour être introduit éventuellement dans un sous-ensemble suivant. Le rétentat est distribué dans les espaces de circulation et constitue le fluide sur lequel on réalise la séparation dans le second sous-ensemble. En d'autres termes, les différents espaces de circulation d'un sous-ensemble sont montés en parallèle et les sous-ensembles successifs d'un module sont montés en série.

Les plaques porte-membranes successives des sous-ensembles et les sous-ensembles successifs d'un module sont assemblés dans des position juxtaposées avec interposition de joints d'étanchéité, par l'intermédiaire de tirants dont le serrage est assuré au niveau des plaques de contention. Chacun des tirants traverse une partie périphérique de chacune des plaques porte-membranes, des plaques séparatrices et des plaques de contention.

Le perméat est drainé, dans chacun des espaces de récupération de perméat délimité entre une membrane et une face d'une plaque porte-membranes, vers des moyens de récupération communiquant avec des canaux d'évacuation du perméat qui peuvent être reliés à des moyens de pompage à l'extérieur du module de filtration.

Les canaux d'évacuation du perméat peuvent être formés par des ouvertures traversant les plaques porte-membranes, les plaques séparatrices et l'une au moins des plaques de contention qui sont placées dans l'alignement l'une de l'autre, lors du montage du module. Cette disposition compacte présente des avantages mais, toutefois, la circulation du perméat qui est réalisée entièrement à l'intérieur du module ne peut être rendue visible depuis l'extérieur du module, si bien qu'un contrôle visuel du fonctionnement des différents éléments constituant le module ne peut être effectué. En particulier, lorsqu'on détecte une coloration ou une turbidité du perméat à la sortie du module due au fait qu'au moins une membrane présente une fuite, on ne dispose pas de moyen simple pour déterminer la position de la membrane présentant une fuite et pour condamner la circulation de fluide dans l'espace de récupération de perméat délimité par la membrane présentant une fuite. En outre, la coloration ou la turbidité du perméat à la sortie du module n'est apparente, du fait de la dilution du perméat provenant des différents éléments du module, que lorsque le débit de fuite à travers la membrane défectueuse est devenu très important.

La détérioration des membranes conduisant à l'apparition d'une fuite peut être limitée ou évitée en grande partie en prenant des mesures pour éviter que des éléments susceptibles de détériorer les membranes puissent venir à leur contact. Par exemple, pour éviter la mise en contact avec les membranes d'ultrafiltration de particules solides de dimensions prohibées susceptibles de déchirer les membranes d'ultrafiltration, on peut réaliser une pré-filtration du fluide avant son introduction dans le module d'ultrafiltration. On peut également prendre des précautions quant aux conditions d'utilisation de l'installation d'ultrafiltration, par exemple quant aux opérations d'arrêt et de redémarrage de l'installation.

Toutefois, il subsiste un risque non négligeable de détérioration de membranes pendant le fonctionnement du dispositif de séparation.

Certains types de module d'ultrafiltration permettent d'effectuer un contrôle du fonctionnement des différents éléments du module et en particulier un contrôle de fuite sur les membranes du module. Dans ces installations, chacun des espaces de récupération de perméat est relié à un ou plusieurs collecteurs disposés à l'extérieur du module, par l'intermédiaire de conduites souples transparentes qui permettent de rendre visible l'écoulement de perméat provenant de chacun des espaces de récupération.

Lorsqu'une certaine coloration ou une certaine opacité du perméat apparaît à l'intérieur d'une conduite souple de liaison d'un espace de récupération de perméat à un collecteur, on déconnecte les deux extrémités de la conduite de liaison, au niveau du module d'ultrafiltration et au niveau du collecteur et on bouche la sortie du module et l'entrée du collecteur par des bouchons.

Il est possible également de relier l'extrémité de la conduite de liaison à l'extérieur du module à un collecteur de récupération de fuite.

Le document US-A-4272373 décrit un dispositif pour le transfert de substances entre un premier et un second fluides comprenant des moyens de circulation du premier fluide dans une partie du dispositif, une pluralité de plaques d'espacement ayant des canaux de circulation pour le second fluide et des moyens de contrôle ajustables pour contrôler l'introduction du second fluide dans seulement un nombre prédéterminé de plaques d'espacement.

Le document JP 2000 301134 décrit un dispositif de nettoyage dans le lequel de l'eau nettoyée obtenue à travers plusieurs filtres de nettoyage est chargée dans des canaux respectifs transparents ou translucides et est ensuite envoyée vers un canal de collection, les canaux respectifs sont placés entre un élément lumineux émettant une lumière du type rayons infrarouges, et un élément de réception qui reçoit la lumière, et la densité de l'eau de déchet de l'eau nettoyée passant dans les canaux peut être mesurée.

Le document WO-A-02076529 décrit un dispositif avec des première et seconds plaques comportant des canaux, Une membrane perméable au gaz est disposée entre les canaux. Selon un mode de réalisation, le dispositif peut comprendre aussi des parois latérales en ploycarbonate transparent ce qui permet de voir des fuites.

Dans tous les cas, les opérations de bouchage ou de connexion à un collecteur de fuite nécessitent le démontage d'une conduite de liaison, ce qui se traduit par une éjection de perméat dans le local où est située l'installation et éventuellement une mise en contact des opérateurs chargés du bouchage ou de la connexion au connecteur de fuite, avec le perméat, ce qui peut être déplaisant ou même dangereux, suivant la nature du fluide traité.

De plus, les tuyaux souples de raccordement qui sont à l'extérieur du module risquent d'être accrochés et détériorés par des opérateurs ou des engins de manutention circulant au voisinage du module.

Le but de l'invention est donc de proposer un dispositif de séparation d'un fluide en une première fraction et au moins une seconde fraction par mise en contact du fluide avec au moins une membrane de filtration, comportant au moins un sous-ensemble de plaques porte-membranes sur chacune des faces opposées desquelles est fixée une membrane de filtration rapportée sur une partie de la plaque porte-membranes comportant des moyens de guidage de fluide pour le drainage de la première fraction du fluide traversant la membrane vers des canaux d'évacuation de la première fraction du fluide dans une partie adjacente à un bord latéral de la plaque porte-membranes, à l'intérieur d'un espace de récupération délimité entre la membrane et la plaque porte-membranes et l'obtention de turbulences sur l'écoulement du fluide, les plaques porte-membranes du sous-ensemble étant rapportées l'une sur l'autre de manière étanche, à leur partie périphérique, deux plaques adjacentes délimitant un espace de réception et de circulation du fluide entre deux membranes fixées sur des faces en vis-à-vis des deux plaques adjacentes, des moyens d'alimentation en fluide des espaces de circulation, des moyens de récupération de la première fraction de fluide en communication avec des ensembles de canaux d'évacuation de la première fraction de fluide et des moyens de récupération du fluide séparé de la première fraction constituant l'au moins une seconde fraction du fluide, ce dispositif permettant d'assurer facilement une surveillance du fonctionnement des différentes membranes de l'ensemble sans utiliser de tuyaux souples susceptibles d'être détruits à l'extérieur du dispositif de séparation et de réaliser une condamnation de l'espace de récupération délimité par une membrane présentant une fuite, sans nécessiter d'opération de bouchage ou de connexion de tuyaux souples.

Dans ce but, les ensembles de canaux d'évacuation comportent, pour chacune des plaques du sous-ensemble et pour chacun des espaces de récupération, une portion ménagée à l'intérieur d'une partie rigide adjacente au bord latéral de la plaque porte-membranes associée à un moyen d'obturation actionnable pour arrêter la circulation dans l'espace de récupération correspondant.

Le dispositif suivant l'invention peut présenter de manière isolée ou en combinaison les caractéristiques suivantes :
- la partie rigide adjacente au bord latéral de la plaque porte-membranes est une pièce rapportée en matière plastique transparente en saillie latérale par rapport au bord latéral de la plaque porte-membranes de manière à rendre visible une circulation de la première fraction du fluide dans la portion des canaux d'évacuation ménagée à l'intérieur de la pièce en saillie latérale par rapport au bord latéral de la plaque porte-membranes ;
- la pièce rigide en saillie radiale par rapport à un bord latéral de la plaque porte-membranes est en polyéthylène téréphtalate.
- la pièce rigide en saillie latérale par rapport au bord latéral de la plaque porte-membrane est une cassette comportant un corps en une seule pièce dans lequel sont ménagés des premiers conduits de liaison d'un canal d'un premier ensemble de canaux d'évacuation de la première fraction du fluide avec des premiers moyens de récupération de la première fraction du fluide dans un premier espace de récupération entre une première face de la plaque porte-membranes et une première membrane et des seconds conduits de liaison d'un canal d'un second ensemble de canaux d'évacuation du premier fluide avec des seconds moyens de récupération du premier fluide dans un second espace de récupération du premier fluide entre la seconde face de la plaque porte-membranes et une seconde membrane fixée sur la seconde face de la plaque porte-membranes, les premiers conduits de liaison et les seconds conduits de liaison de la cassette étant disposés dans des parties de la cassette successives dans une direction longitudinale suivant le bord latéral de la plaque porte-membranes dirigé suivant la direction de circulation du fluide au contact des membranes portées par la plaque porte-membranes ;
- les pièces rigides en saillie latérale par rapport à un bord latéral de deux plaques porte-membranes adjacentes sont fixées suivant des bords latéraux parallèles des plaques porte-membranes adjacentes situés de part et d'autre du sous-ensemble du dispositif dans une direction transversale perpendiculaire à la direction longitudinale de circulation du fluide dans chacun des espaces de circulation et à la direction longitudinale du sous-ensemble suivant laquelle est réalisée l'évacuation de la première et de la deuxième fractions du fluide;
- le moyen d'obturation de la portion de l'ensemble de canaux d'évacuation du premier fluide ménagée à l'intérieur de la pièce rigide en saillie radiale par rapport à un bord latéral de la plaque porte-membranes est une vis comportant une partie filetée destinée à être vissée dans une ouverture de la pièce rigide débouchant à l'extérieur de la pièce rigide et communiquant avec la portion de l'ensemble de canaux d'évacuation ménagée dans la pièce rigide et un piston d'obturation mobile entre une position d'ouverture et une position de fermeture de la portion de l'ensemble de canaux d'évacuation du premier fluide ménagée à l'intérieur de la pièce rigide ;
- la partie rigide adjacente au bord latéral de la plaque porte-membranes est une partie intégrante de la plaque porte-membrane ;
- l'ensemble de canaux d'évacuation de la première fraction de fluide, les moyens d'alimentation en fluide des espaces de circulation du sous-ensemble et les moyens de récupération de la seconde fraction de fluide sont constitués par des ouvertures traversant les plaques porte-membranes juxtaposées, lors de l'assemblage des plaques porte-membranes en position adjacente ;
- les moyens de récupération de la première fraction du fluide dans un espace de récupération délimité entre une membrane et une face de la plaque porte-membranes comportent des nervures sensiblement rectilignes de direction longitudinale et discontinues alignées au voisinage d'un bord latéral dans une direction longitudinale de la plaque porte-membranes délimitant entre elles des chicanes de passage du premier fluide et de guidage du premier fluide vers l'ensemble de canaux d'évacuation de la première fraction du fluide, les parties en saillie sur la face de la plaque porte-membranes rectilignes et discontinues assurant également un maintien de la membrane délimitant l'espace de récupération avec la face de la plaque porte-membranes ;
- l'espacement entre les plaques porte-membranes et l'épaisseur des zones de réception et de circulation de fluide entre deux membranes en vis-à-vis portées par deux plaques porte-membranes adjacentes est réglé par l'un des moyens suivants :
   - joint d'étanchéité intercalé entre deux plaques porte-membranes successives comportant, à sa périphérie destinée à venir en contact avec la partie périphérique d'une plaque porte-membranes, au moins une partie en saillie par rapport à une surface du joint parallèle à une plaque porte-membranes, de telle sorte que l'épaisseur du joint soit maximale suivant la partie en saillie,
   - intercalaire en matière plastique entre les parties périphériques de deux plaques porte-membranes adjacentes,
   - nervure en saillie sur une partie périphérique d'une plaque porte-membrane ;
- le joint d'étanchéité périphérique destiné à être intercalé entre deux plaques porte-membranes qui présente la forme générale d'un cadre rectangulaire comporte une partie de joint centrale disposée sensiblement suivant une médiane de direction longitudinale du joint en forme de cadre rectangulaire, de manière à limiter ou empêcher les vibrations des membranes portées par les plaques porte-membranes entre lesquelles est intercalé le joint d'étanchéité ;
- le dispositif comporte au moins un sous-ensemble de plaques porte-membranes de forme sensiblement rectangulaire disposé de manière que la direction longitudinale des plaques porte-membranes soit verticale, et les parties rigides adjacentes à un bord latéral longitudinal de la plaque porte-membranes sont situées à la partie supérieure des bords latéraux longitudinaux des plaques porte-membranes ;
- le dispositif comporte au moins deux sous-ensembles de plaques porte-membranes séparés l'un de l'autre par des plaques séparatrices et maintenus assemblés entre deux plaques de contention d'extrémité, les plaques séparatrices étant traversées par au moins une ouverture de passage du fluide ou de la seconde fraction du fluide à une extrémité longitudinale et par deux jeux de deux ouvertures latérales de passage de la seconde fraction du fluide dans des parties d'extrémité longitudinales et dans des zones latérales des plaques séparatrices, de manière à pouvoir réaliser un montage en série des sous-ensembles ;
- les plaques de contention à chacune des extrémités du dispositif constitué d'au moins deux sous-ensembles comportent des parties en saillie latérale de protection des parties rigides adjacentes aux bords latéraux des plaques porte-membranes placées de manière juxtaposée lors de l'assemblage des plaques porte-membranes et des sous-ensembles du dispositif de séparation ;
- les membranes sont des membranes de filtration comportant des pores de dimensions nanométriques ou micrométriques, la première fraction du fluide étant un perméat obtenu par ultrafiltration ou microfiltration et la seconde fraction du fluide un rétentat ; et
- le dispositif suivant l'invention peut être utilisé pour la séparation de solvant et de peinture mise en oeuvre dans une installation de peinture industrielle par cataphorèse.

Afin de bien faire comprendre l'invention, on va maintenant décrire, à titre d'exemple, en se référant aux figures jointes en annexe, un module d'ultrafiltration selon l'invention qui peut être utilisé en particulier pour la séparation de solvant et de peinture utilisés dans un procédé de peinture par cataphorèse.
La figure 1 est une vue en élévation latérale d'un module d'ultrafiltration suivant l'invention.
La figure 2 est une vue en perspective partiellement éclatée du module représenté sur la figure 1.
La figure 3 est une vue en plan d'une plaque porte-membranes du module suivant l'invention.
La figure 4 est une vue agrandie du détail 4 de la figure 3.
La figure 5 est une vue agrandie du détail 5 de la figure 3.
La figure 6A est une vue en coupe suivant A-A de la figure 3.
La figure 6B et une vue en coupe suivant B-B de la figure 3.
La figure 7 est une vue en coupe suivant 7-7 de la figure 3.
La figure 8 est une vue de côté d'un bord latéral d'une plaque porte-membranes dans une zone de montage d'une cassette de visualisation du perméat.
La figure 9 est une vue en plan d'une cassette de visualisation du perméat montée sur le bord latéral d'une plaque porte-membranes.
La figure 10 est une vue en plan d'un joint d'étanchéité entre plaques porte-membranes.
La figure 11 est une vue en coupe suivant 11-11 de la figure 10.
La figure 12 est une vue en plan d'une plaque séparatrice du module suivant l'invention.
La figure 13 est une vue en plan d'une plaque de contention du module suivant l'invention.
La figure 14 est une vue en coupe transversale suivant 14-14 de la plaque de contention représentée sur la figure 13.

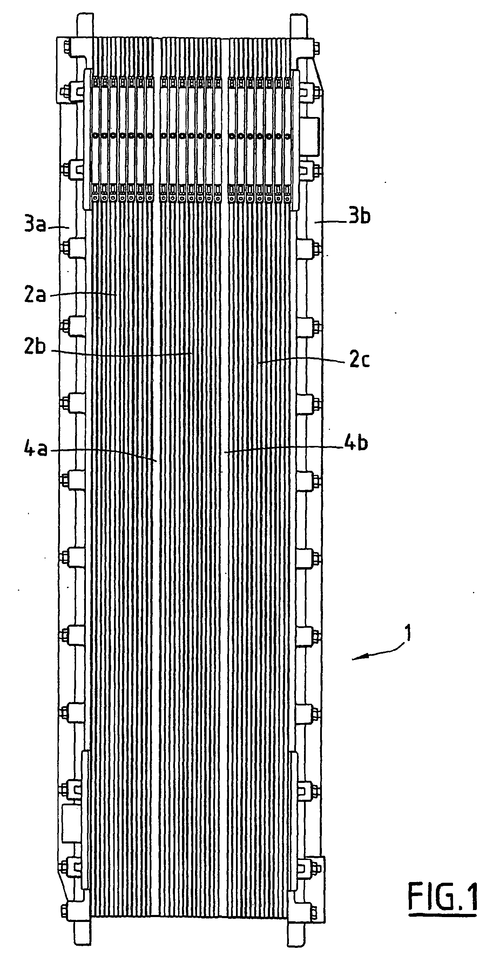

Sur la figure 1, on voit un module d'ultrafiltration suivant l'invention désigné par le repère 1.

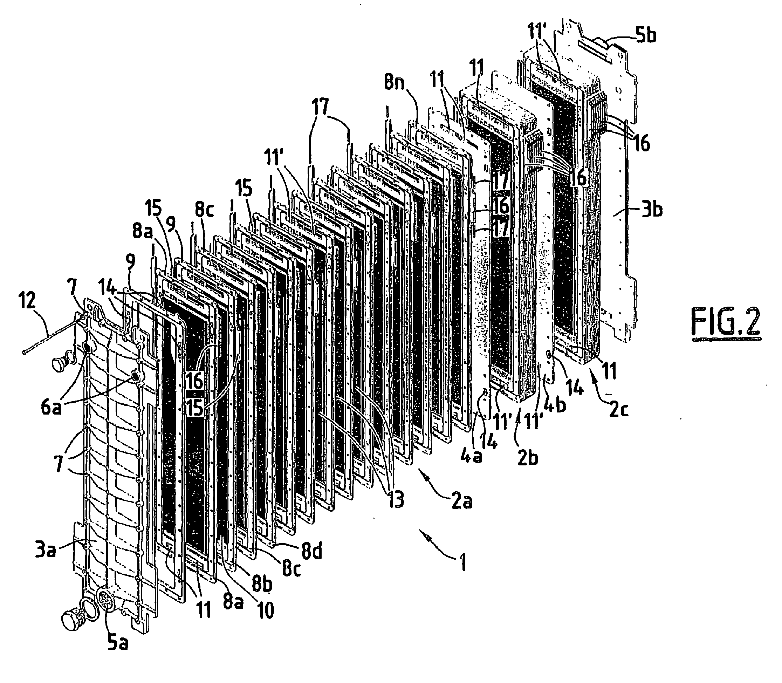

Sur la figure 2, le module a été représenté en vue partiellement éclatée.

On va décrire le module, de manière générale, en se référant aux figures 1 et 2.

Le module 1 comporte trois sous-ensembles 2a, 2b, 2c successifs dans la direction axiale du module, c'est-à-dire la direction de circulation générale du perméat et du rétentat pour leur évacuation hors du module. A ses extrémités axiales, le module est fermé par des plaques de rétention 3a et 3b et des plaques séparatrices 4a et 4b délimitent les sous-ensembles 2a, 2b, 2c, à l'intérieur du module.

Le sous-ensemble d'ultrafiltration 2a est délimité, d'un côté, par la plaque de contention 3a et, de l'autre côté, par la première plaque séparatrice 4a, le second sous-ensemble 2b est délimité entre la première et la seconde plaques séparatrices 4a et 4b et le troisième sous-ensemble 2c est délimité par la seconde plaque séparatrice 4b et la seconde plaque de contention 3b.

Les plaques de contention 3a et 3b sont réalisées sous forme extrêmement rigide et comportent des ajutages tels 5a et 6a pour le raccordement du module à des circuits d'alimentation en fluide à filtrer et de récupération de fractions du fluide après séparation.

Les plaques de contention 3a et 3b comportent également des oeilletons renforcés 7 pour le passage et le serrage de tirants 8 d'assemblage des sous-ensembles et des éléments constitutifs de chacun des sous-ensembles.

Le sous-ensemble 2a a été représenté en vue éclatée sur la figure 2 et sera décrit plus en détail.

Les sous-ensembles 2b et 2c du module 1 sont identiques au sous-ensemble 2a et ne seront donc pas décrits en détail.

Le sous-ensemble 2a est constitué principalement par des plaques porte-membranes 8 de forme générale rectangulaire portant chacune, sur deux faces opposées, une première et une seconde membranes d'ultrafiltration 10. Entre deux plaques successives, dans la direction axiale du module, est intercalé un joint d'étanchéité 9 en forme de cadre rectangulaire venant en appui sur la partie périphérique rectangulaire des deux plaques porte-membranes entre lesquelles il est intercalé. Un joint d'étanchéité 9 est également intercalé entre la première plaque porte-membranes 8a et la première plaque de contention 3a. De même, un joint d'étanchéité 9 est intercalé entre la dernière plaque porte-membranes 8n et la plaque séparatrice 4a.

Les plaques porte-membranes 8 et les joints d'étanchéité 9 seront décrits plus en détail par la suite. On peut cependant indiquer ici que les joints d'étanchéité 9 ont pour fonction générale d'assurer une étanchéité à la périphérie des plaques porte-membranes de manière à fermer les espaces de circulation du fluide à filtrer et du rétentat entre deux membranes successives, d'assurer l'étanchéité entre les membranes et les porte-membranes et de régler de manière très précise la distance entre deux plaques porte-membranes successives définissant la largeur de l'espace de circulation de fluide et de rétentat entre deux membranes successives.

L'étanchéité entre les parties périphériques superposées des plaques porte-membranes pourrait être réalisée à titre de variantes, sans utilisation de joints, par exemple en prévoyant des parties périphériques empilées et serrées l'une contre l'autre, éventuellement avec un intercalaire en matière plastique jouant le rôle d'espaceur. L'étanchéité est alors assurée par contact plastique sur plastique ou plastique sur métal.

Les plaques porte-membranes de forme rectangulaire sont disposées perpendiculairement à la direction longitudinale du module suivant laquelle on réalise la circulation générale des premier et second fluides (perméat et rétentat) pour leur évacuation.

Les plaques porte-membranes 8 sont traversées à leurs extrémités longitudinales par des lumières 11 et 11' de forme rectangulaire allongée qui occupent une partie substantielle de la largeur des plaques. Les lumières 11 et 11' traversant les plaques porte-membranes sont disposées de part et d'autre des extrémités longitudinales des membranes 10 portées par la plaque 8.

Lorsque le module est assemblé par juxtaposition des plaques porte-membranes et des joints (ou intercalaires en matière plastique) qui sont maintenus par l'intermédiaire des tirants 12, les lumières successives 11 et 11' des plaques porte-membranes constituent des canaux de circulation longitudinale du fluide à filtrer et du rétentat qui sont en communication, suivant toute la longueur du module, avec les espaces de réception et de circulation du fluide et du rétentat délimités chacun entre deux membranes 10 placées en vis-à-vis sur deux plaques porte-membranes successives. Les canaux constitués par les lumières 11 et 11' constituent des moyens respectifs d'alimentation du sous-ensemble en fluide à filtrer et de récupération du rétentat. Lorsque le fluide à filtrer est introduit dans le module 1 par l'intermédiaire d'une conduite reliée à l'ajutage 5a, les lumières 11 situées à la partie inférieure des plaques porte-membranes 8 du sous-ensemble constituent un canal de distribution de fluide à filtrer communiquant avec chacun des espaces successifs 13 de réception et de circulation de fluide délimités entre deux membranes successives 10 du sous-ensemble. Les lumières 11' traversant les plaques à leurs extrémités longitudinales supérieures constituent alors des canaux de récupération de rétentat communiquant avec la partie de sortie de chacun des espaces de réception et de circulation de fluide à filtrer et de rétentat. Dans chacun des espaces de réception et de circulation, le fluide à filtrer circule dans la direction longitudinale des plaques porte-membranes et des membranes, c'est-à-dire dans une direction perpendiculaire à la direction longitudinale du module suivant laquelle est réalisée la circulation générale du perméat et du rétentat récupérés, respectivement à la sortie des espaces de réception et de circulation 13 et dans des espaces de récupération de perméat délimités chacun entre une membrane 10 et une face d'une plaque porte-membranes 8.

Les plaques porte-membranes 8, les joints d'étanchéité 9 et les plaques séparatrices 4 sont traversés par des lumières de forme oblongue 14 sur chacun de leurs côtés latéraux, de préférence dans la partie supérieure des plaques porte-membranes, dans le cas d'un module disposé de manière que les plaques porte-membranes aient leur direction longitudinale verticale, cette direction étant également la direction de circulation du fluide à filtrer et du rétentat dans les espaces de circulation 13.

Lors de l'assemblage des sous-ensembles et du module, les lumières 14 traversant les plaques porte-membranes, les joints 9 et les plaques adaptatrices viennent dans l'alignement les unes des autres pour constituer un canal continu d'évacuation de perméat, de direction longitudinale.

Les canaux d'évacuation de perméat sont disposés à la partie supérieure et sur chacun des côtés latéraux du module. Les plaques porte-membranes 8 comportent chacune, suivant l'un de leurs bords latéraux, dans la partie supérieure du bord latéral traversée par les lumières 14, une barrette de raccordement 15 venue de matière avec le bord de la plaque porte-membranes. Les barrettes de raccordement 15 sont disposées, pour deux plaques porte-membranes adjacentes, sur des côtés latéraux opposés des plaques porte-membranes.

Dans le cas du sous-ensemble 2a représenté sur la figure 2, les plaques impaires 8a, 8c, ... comportent une barrette de raccordement 15 sur leur côté droit (dans le sens d'alimentation en fluide à filtrer) et les plaques porte-membranes paires 8b, 8d, ... comportent des barrettes de raccordement 15 sur leur côté gauche.

Sur chacune des barrettes de raccordement 15 est fixée une cassette 16 dans laquelle sont ménagés des conduits de liaison qui présentent des ajutages de raccordement qui viennent s'engager dans des ouvertures des barrettes de raccordement 15 pour assurer une liaison entre les ouvertures de passage des barrettes de raccordement 15 et les conduits de liaison à l'intérieur des cassettes 16.

Les cassettes et barrettes de raccordement qui sont montées en saillie par rapport au bord latéral des plaques porte-membranes 8 assurent, pour chacune des plaques porte-membranes 8, une connexion entre les deux espaces de récupération de perméat délimités chacun entre une face de la plaque porte-membranes et une membrane 10 et le canal d'évacuation de perméat de direction longitudinale constitué par les lumières 14 juxtaposées. Chacune des cassettes 16 comporte un premier ensemble de conduits de liaison entre un premier espace de récupération de perméat et le canal longitudinal de récupération de perméat et un second ensemble de conduits de liaison du second espace de récupération de perméat situé sur la face opposée de la plaque porte-membranes avec le canal d'évacuation longitudinal.

Chacun des ensembles de conduits de liaison d'une cassette 16 peut être obturé par un moyen d'obturation 17 tel qu'une vis, comme il sera décrit par la suite.

On peut ainsi obturer sélectivement et indépendamment l'un ou l'autre des canaux de liaison, pour isoler l'un ou l'autre des deux espaces de récupération de la plaque porte-membrane du canal d'évacuation longitudinal.

Au lieu d'être rapportées sur les côtés latéraux des plaques porte-membranes, les cassettes pourraient être réalisées en une seule pièce avec la plaque porte-membrane. Chacune des cassettes peut être disposée en saillie par rapport à un bord latéral d'une plaque porte-membrane ou intégrée complètement ou partiellement à une partie latérale de la plaque porte-membrane.

Comme il sera expliqué par la suite, les plaques porte-membranes peuvent comporter, sur chacune de leurs faces, des rainures de drainage de perméat qui permettent de diriger le perméat récupéré dans les espaces de récupération vers des zones de récupération de perméat et des canaux d'évacuation qui comportent le canal longitudinal constitué par les lumières 14 et les conduits de liaison obturables à l'intérieur des cassettes 16.

Des moyens de guidage du perméat récupéré pourraient être constitués, à titre de variante, par un grillage placé éventuellement dans un évidement de la plaque porte-membrane.

On pourra remarquer que la structure des sous-ensembles et du module suivant l'invention est particulièrement compacte, l'ensemble des canaux de distribution et de récupération étant réalisé à l'intérieur du module sans qu'il soit nécessaire de prévoir des conduites souples à l'extérieur du module. Les cassettes 16 fixées sur les barrettes 15 suivant les parties supérieures des bords longitudinaux des plaques porte-membranes 8 sont réalisées en un matériau rigide transparent, de sorte que la circulation de perméat dans les canaux de liaison des cassettes 16 est parfaitement visible sur chacun des côtés du module 1. Les cassettes pourraient également être réalisées en un matériau opaque et comporter une fenêtre transparente.

Dans le cas d'un module d'ultrafiltration de peinture de cataphorèse ou d'eau de rinçage utilisé dans une installation de peinture par cataphorèse, le perméat est le solvant de la peinture qui est parfaitement limpide dans le cas d'un fonctionnement satisfaisant du module.

Dans le cas d'une fuite due à une déchirure d'une membrane 10, de la peinture traverse la membrane et le perméat est alors trouble ou coloré (généralement en gris dans le cas de peinture de sous-couche anti-corrosion de carrosserie), si bien que la circulation du perméat dans les conduits de liaison entre l'espace de récupération de perméat dont la membrane présente une fuite et le canal d'évacuation de perméat est alors trouble ou coloré. L'opérateur chargé de la surveillance de l'installation détecte immédiatement la présence d'une fuite sur l'un des espaces de récupération et la localisation de la membrane présentant une fuite. Ce repérage est particulièrement facile lorsque les cassettes 16 sont disposées à la partie supérieure du module, dans une zone située sensiblement à hauteur du regard de l'observateur. Les cassettes 16 en matériau rigide qui ne sont que faiblement en saillie latérale par rapport à la plaque porte-membranes ne risquent pas d'être détériorées lors du passage de personnels ou de matériels de transport le long du module, contrairement aux dispositifs selon l'art antérieur comportant des tuyaux souples extérieurs qui pouvant être accrochés par des personnels ou matériels circulant au voisinage du module.

En outre la disposition des cassettes alternativement sur un bord latéral et sur un bord latéral opposé, sur les plaques porte-membranes successives permet de prévoir des cassettes ayant une épaisseur sensiblement égale à l'épaisseur des plaques et assurant la surveillance des deux espaces de récupération de perméat de la plaque, c'est-à-dire des deux membranes portées par la plaque porte-membranes, indépendamment l'une de l'autre.

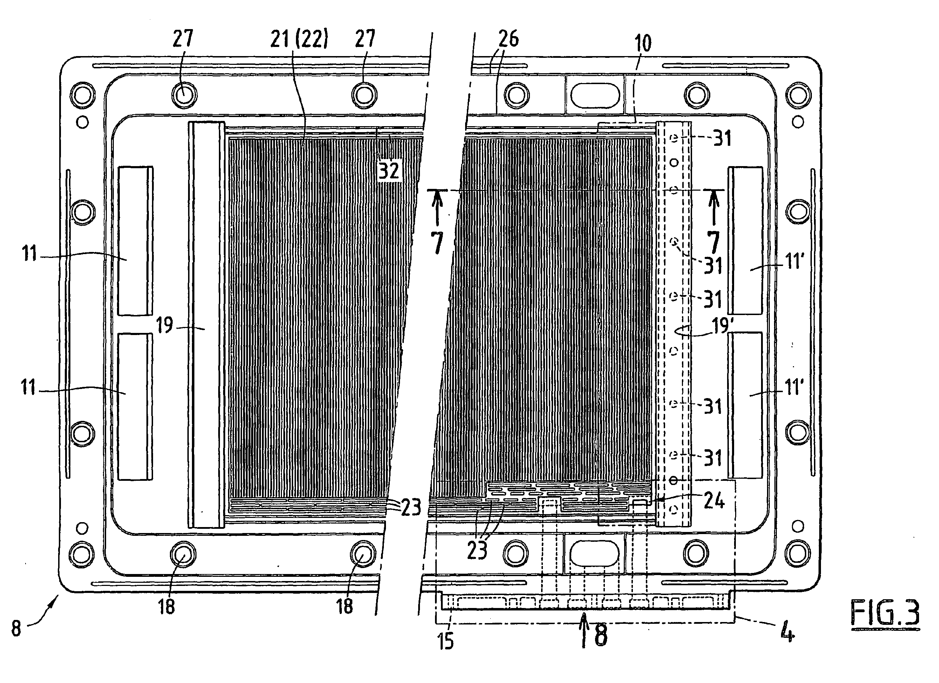

Sur la figure 3, on a représenté, dans une vue en plan, une plaque porte-membranes 8, la partie centrale de la plaque entre ses extrémités longitudinales ayant été omise, cette partie centrale ne présentant pas de particularités nécessitant une description détaillée.

La plaque porte-membrane 8 présente une forme générale rectangulaire allongée, la longueur de la plaque pouvant être par exemple supérieure à un mètre et la largeur, de l'ordre de 30 cm. Les plaques porte-membranes 8 peuvent être réalisées par moulage par injection d'une matière plastique telle que du polypropylène chargé par du talc fournissant une résistance et des propriétés de contact satisfaisantes.

Sur la figure 3, la plaque porte-membranes 8 a été représentée avec son extrémité inférieure (par référence à la figure 2) sur la gauche de la figure et son extrémité supérieure, dans la partie droite de la figuré.

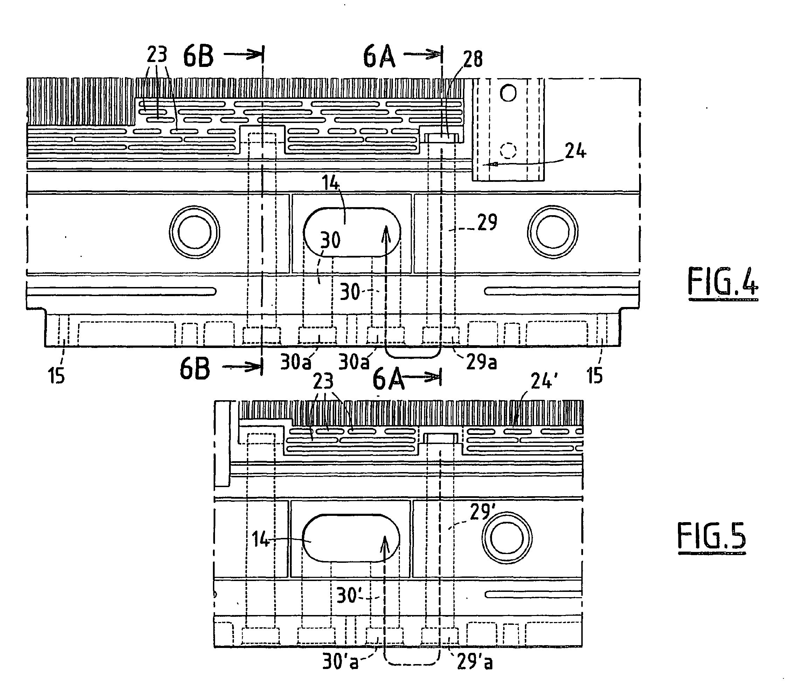

Sur la figure 3, on voit l'une des faces de la plaque porte-membranes ou face A, la seconde face, ou face B, étant analogue, compte tenu de certaines différences qui seront expliquées plus loin, en particulier par référence à la figure 5 qui représente un détail de la face B de la plaque non visible sur la figure 3, les détails des figures 4 et 5 étant disposés respectivement sur les faces A et B de part et d'autre de la plaque porte-membranes 8.

De manière générale, la plaque porte-membranes 8 comporte une partie périphérique en forme de cadre rectangulaire traversée par des ouvertures 18 de passage des tirants 8 d'assemblage des sous-ensembles et du module. La partie centrale de la plaque porte-membrane de forme rectangulaire à l'intérieur du cadre périphérique comporte, à ses extrémités, deux parties planes lisses traversées du côté inférieur de la plaque par les lumières 11 de distribution du fluide à filtrer et, du côté de la partie supérieure de la plaque porte-membranes, par les lumières 11' de récupération de rétentat.

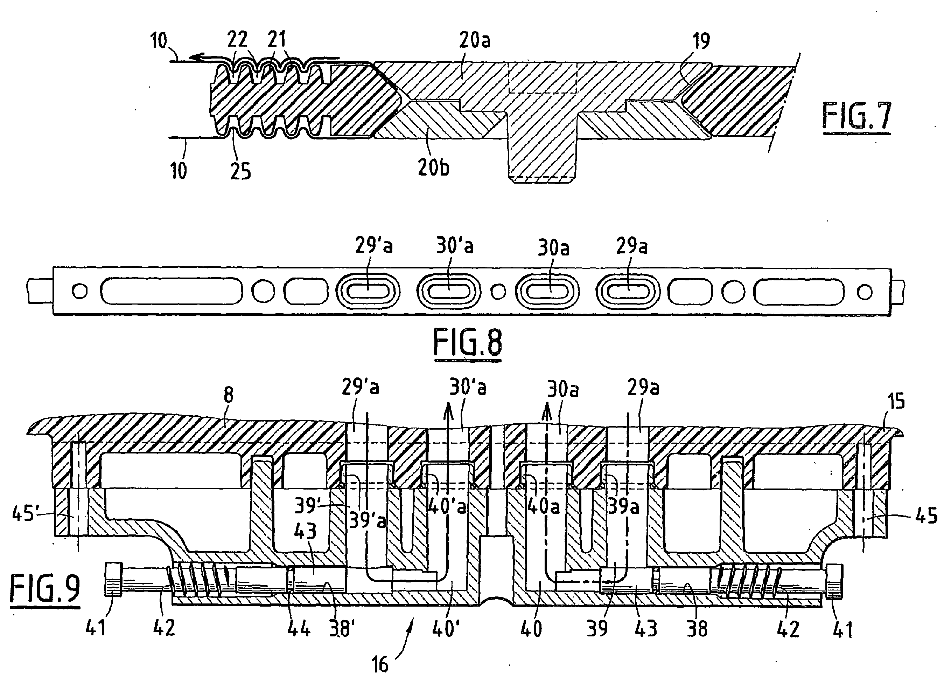

Les parties planes aux extrémités longitudinales de la partie centrale de la plaque porte-membranes 8 sont également traversées par des lumières 19 et 19' rectangulaires occupant la plus grande partie de la largeur de la partie centrale de la plaque porte-membranes dont les côtés longitudinaux comportent des chanfreins inclinés en sens inverse à partir de la face A et à partir de la face B de la plaque porte-membranes, comme il est visible en particulier sur la figure 7.

Des barrettes mâles et femelles, respectivement 20a et 20b, sont introduites dans les lumières 19 et 19' et assemblées et soudées entre elles, comme il sera expliqué plus loin, de manière à assurer le maintien des extrémités longitudinales des deux membranes 10 portées par la plaque porte-membrane 8. La fixation des membranes par l'intermédiaire de barrettes pourrait être remplacée, à titre de variante, par un collage des membranes sur des parties d'extrémité des plaques porte-membranes.

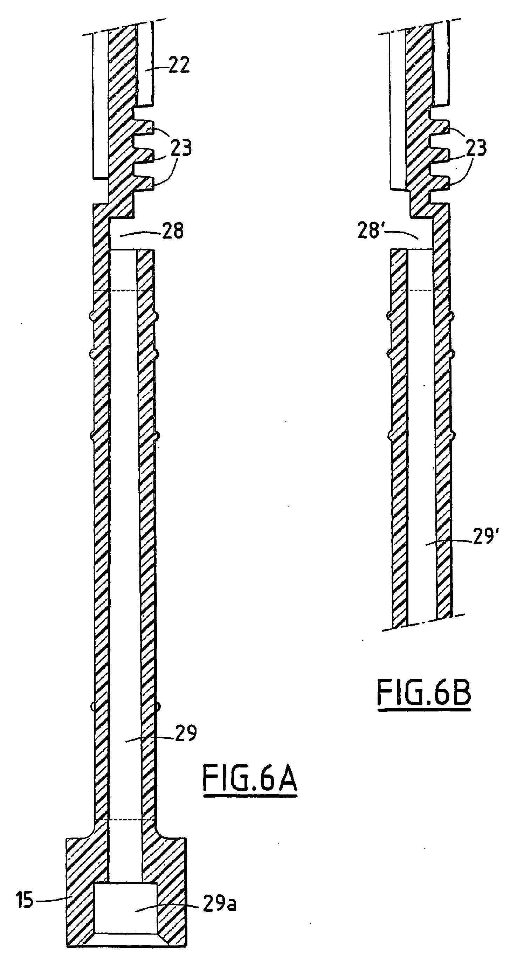

Entre ses extrémités sur lesquelles sont fixées les membranes 10, la plaque 8 peut comporter, sur ses deux faces, des nervures rectilignes 21 délimitant entre elles des rainures 22 de direction transversale. Suivant un côté longitudinal, sur sa face A et sur sa face B, la plaque porte-membranes 8 comporte une zone de guidage du perméat dans laquelle la plaque comporte des nervures en saillie rectilignes discontinues 23 (visibles en particulier sur les figures 6A et 6B) qui constituent des chicanes pour assurer un guidage optimal du perméat vers une zone de récupération de perméat 24 (sur la face A) ou 24' (sur la face B) représentée respectivement sur les figures 4 et 5.

L'ensemble des éléments de drainage de la plaque porte-membrane 8 sur ses faces A et B est constitué par les rainures rectilignes transversales 22 et les chicanes 23, de manière que le perméat récupéré dans un espace de récupération 25 délimité par une membrane 10 et une face de la plaque porte-membranes 8 soit dirigé vers la zone 24 (ou 24') dans laquelle la plaque porte-membranes comporte une ouverture mettant en communication l'espace de récupération 25 avec une partie d'entrée des canaux d'évacuation de perméat, comme il sera expliqué par la suite.

Comme indiqué plus haut, les moyens de guidage du perméat qui assurent le drainage du perméat et la formation de turbulences sur l'écoulement du perméat peuvent être réalisés, à titre de variante, par un grillage logé dans la plaque porte-membranes ou entre deux plaques porte-membranes successives.

Les membranes 10 qui sont fixées contre les deux faces de la plaque porte-membranes 8, dans la partie comportant les moyens de guidage du perméat sont constituées par un support en tissu ou intisse de très faible épaisseur (quelques dizaines de micromètres) enduit par une substance tel que le collodion permettant de réaliser des pores de dimensions nanométriques à travers la membrane.

Comme il est visible sur la figure 3 ainsi que sur les figures 6A, 6B et 7, la plaque porte-membrane peut comporter sur ses deux faces, suivant toute sa zone périphérique, des bourrelets 26 ayant de très petites sections de forme semi-circulaire légèrement en saillie sur les faces de la plaque permettant un appui du joint 9 pour assurer une bonne étanchéité. Autour de chacune des ouvertures 18 de passage d'un tirant 8 d'assemblage du module, les plaques porte-membranes 8 peuvent comporter sur leurs deux faces des bourrelets circulaires 27 assurant l'appui d'une partie d'étanchéité du joint et ainsi une étanchéité autour des tirants traversant l'ensemble du module.

Comme il est visible sur les figures 4 et 6A, la plaque porte-membranes 8 comporte, dans sa zone de récupération de perméat 24, une ouverture non traversante 28 débouchant sur la face A de la plaque porte-membranes et communiquant avec un canal 29 de direction transversale traversant le bord de la plaque porte-membranes, dans l'épaisseur de la plaque, qui aboutit à une ouverture de raccordement 29a de forme oblongue, dans la barrette de raccordement 15 disposée légèrement en saillie par rapport au bord latéral de la plaque.

De même, comme il est visible sur les figures 5 et 6B, la plaque porte-membranes 8 comporte, dans sa zone 24', une ouverture 28' non traversante débouchant sur la face B et communiquant avec un canal 29' de récupération de perméat débouchant sur le côté latéral de la barrette de raccordement 15 suivant une ouverture de forme oblongue 29'a.

Comme il sera expliqué par la suite, la cassette 16 fixée sur le bord latéral de la plaque porte-membranes 8 suivant la barrette de raccordement 15 (voir figure 9) comporte un premier conduit de liaison permettant de relier le canal d'entrée 29 à un canal de sortie 30 débouchant dans la lumière 14 traversant la plaque porte-membranes, c'est-à-dire dans le canal longitudinal d'évacuation de perméat. De même, un second conduit de liaison à l'intérieur de la cassette 16 permet de relier le canal d'entrée 29' en communication avec l'ouverture 28' sur la face B de la plaque porte-membranes à un canal de sortie 30' débouchant dans l'ouverture oblongue traversante 14 de la plaque porte-membranes 8, c'est-à-dire dans le canal longitudinal d'évacuation de perméat.

On voit, en particulier sur les figures 6A à 6B que les zones 24 et 24' comportant des chicanes ne sont pas identiques sur les faces A et B de la plaque porte-membranes. Toutefois, leurs fonctions sont les mêmes, les nervures 23 définissant ces chicanes assurant à la fois le guidage du perméat et le maintien de la membrane 10 dans sa partie latérale recouverte par le joint 9.

Comme il est visible sur la figure 3 et sur la figure 7, les membranes 10 sont fixées sur chacune des faces de la plaque porte-membranes 8 par l'intermédiaire des barrettes 20a et 20b introduites dans les ouvertures 19 et 19' assurant, par effet de coin, la fixation du bord d'extrémité longitudinal de la membrane entre une surface inclinée du bord d'une barrette et une surface inclinée du bord de l'ouverture 19 ou 19' correspondante.

Les tenons 31 des barrettes mâles 20a sont engagés dans des ouvertures correspondantes des barrettes femelles, les barrettes mâles et femelles étant disposées de part et d'autre de la plaque porte-membranes. Après fixation d'une membrane à ses extrémités longitudinales par les barrettes mâles et femelles engagées l'une dans l'autre, on réalise un soudage par ultrasons des pions 31 des barrettes mâles engagées dans les ouvertures de forme tronconique des barrettes femelles. On réalise ainsi un blocage des barrettes mâles et femelles l'une contre l'autre et un serrage efficace de la membrane à ses extrémités longitudinales.

Les barrettes 20a, 20b sont réalisées de manière que leur surface plane externe se trouve décalée légèrement vers l'extérieur par rapport à la surface externe de la membrane 10 correspondante.

Les bords longitudinaux de la membrane viennent en appui sur des bourrelets rectilignes longitudinaux 32 ayant une petite section de forme semi-circulaire, comme il est visible par exemple sur les figures 6A et 6B.

La fixation de la membrane suivant ses bords longitudinaux contre la face de la plaque porte-membranes est assurée par serrage d'un joint 9 contre les bords périphériques de la plaque porte-membrane et en particulier contre les bourrelets longitudinaux rectilignes 32.

Les membranes pourraient également, à titre de variante, être fixées par collage sur les plaques porte-membranes.

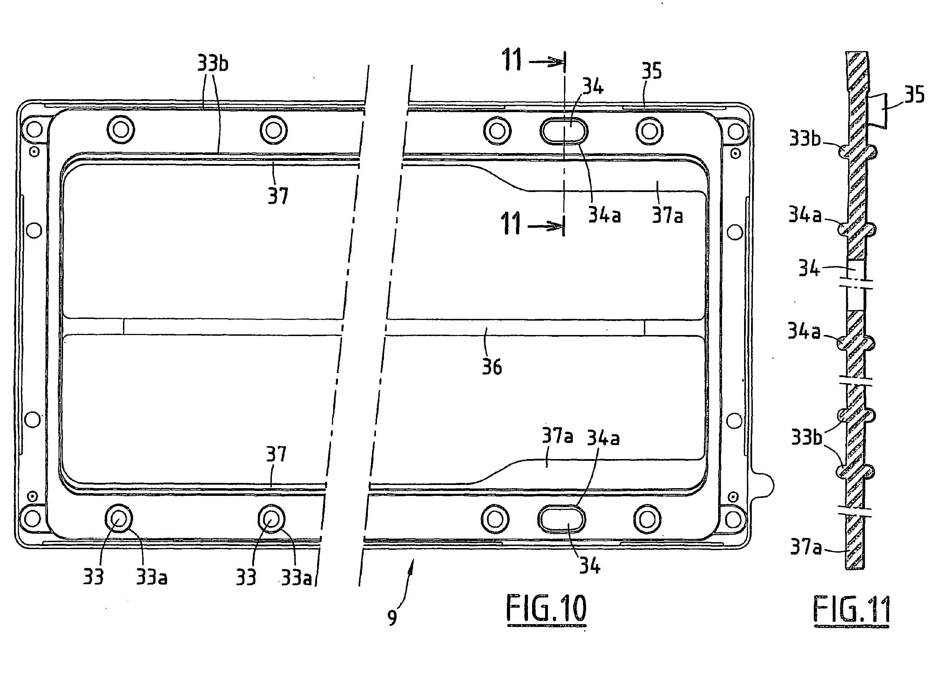

Sur la figure 10, on a représenté un joint d'étanchéité 9 destiné à être intercalé entre deux plaques porte-membranes ou entre une plaque porte-membranes et une plaque séparatrice ou une plaque de contention.

Le joint d'étanchéité 9, habituellement de forme plate, en caoutchouc présente la forme générale d'un cadre rectangulaire analogue à la partie périphérique d'une plaque porte-membranes.

Le joint d'étanchéité 9 est traversé suivant sa périphérie par des trous 33 de passage de tirants d'assemblage du module entourés chacun par un bourrelet semi-circulaire 33a en saillie sur la face du joint destiné à venir s'engager autour d'un bourrelet correspondant en saillie sur une face de la plaque porte-membranes autour d'une ouverture de passage d'un tirant.

Le joint comporte également, sur ses deux faces destinées à venir en contact avec les faces de deux plaques porte-membranes, de part et d'autre du joint, des bourrelets périphériques 33b destinés à parfaire l'étanchéité entre le joint et les plaques, lors du serrage du module par les tirants.

Comme il est visible sur les figures 10 et 11, le joint comporte des ouvertures 34 de forme oblongue destinées à venir en coïncidence avec les ouvertures 14 traversant les plaques porte-membranes et les plaques séparatrices, lors de l'assemblage du module, pour constituer un canal continu rectiligne d'évacuation du perméat.

Les ouvertures oblongues 34 sont entourées par des bourrelets d'étanchéité 34a de petites dimensions et à section semi-circulaire destinés à venir en appui sur les plaques porte-membranes de part et d'autre du joint, de manière à assurer l'étanchéité du canal d'évacuation de perméat.

Enfin le joint comporte, comme il est visible en particulier sur la figure 11, sur une face destinée à venir en appui sur une plaque porte-membranes, des nervures discontinues périphériques 35 en saillie ayant une surface plane d'appui et destinée à maintenir un écartement d'amplitude parfaitement déterminée entre deux plaques porte-membranes successives (ou entre une plaque porte-membranes et une plaque séparatrice). Lorsque les plaques porte-membranes équipées de membranes sont assemblées dans des positions adjacentes et serrées entre elles par les tirants, les nervures en saillie 35 jouant le rôle d'entretoises assurent un écartement parfaitement continu et parfaitement déterminé entre deux plaques adjacentes quelconques du module. Cet écartement permet de régler à une valeur parfaitement déterminée la distance entre deux membranes situées en vis-à-vis, c'est-à-dire l'épaisseur de l'espace de réception et de circulation de fluide et de rétentat entre deux membranes 10.

Les parties en saillie 35 jouant le rôle d'entretoises sont disposées suivant les quatre côtés du joint mais ne sont toutefois pas continues suivant la périphérie du joint.

Dans le cas d'un montage sans joint d'étanchéité, un intercalaire en matière plastique peut assurer le réglage de l'écartement entre les membranes.

Le joint comporte de plus, dans sa partie interne, un ou deux bourrelets périphériques continus 33b destinés à venir en appui sur la membrane et, suivant une médiane de l'ouverture du joint, une languette centrale 36 de direction longitudinale destinée à venir en appui sur les membranes, sur les deux faces du joint, par l'intermédiaire d'une zone d'appui dans laquelle la languette 36 présente une épaisseur accrue, suivant la majeure partie de la longueur de la membrane. On évite ainsi des vibrations des membranes lorsque celles-ci sont au contact du fluide ou des rétentats circulant dans la direction longitudinale des membranes et des plaques porte-membranes, dans les espaces de circulation 13 entre les membranes. La mise en vibration des membranes risque d'entraîner une détérioration et une usure accélérée de ces membranes.

Le joint d'étanchéité 9 comporte, suivant ses bords longitudinaux internes, une partie plane 37 comportant à l'une des extrémités du joint 9 des parties élargies 37a destinées à venir en appui, lors du serrage du joint, sur les bords de la membrane au-delà des bourrelets d'appui 33b. Les zones élargies 37a sont disposées à l'extrémité supérieure du joint destinée à venir en vis-à-vis de la zone de récupération de perméat.

Le joint d'étanchéité 9 peut être entièrement plat, des nervures en saillie pouvant être prévues sur les faces des plaques porte-membranes venant en contact avec le joint d'étanchéité, pour régler l'écartement des plaques porte-membranes et assurer la mise en appui sur le joint d'étanchéité.

Sur la figure 7, on a représenté les membranes 10 dans leur position de serrage, leurs extrémités longitudinales étant maintenues entre les barrettes 20a et 20b et les bords correspondants des ouvertures 19 et 19' de la plaque porte-membrane et leurs extrémités longitudinales maintenues par serrage d'un joint d'étanchéité. Dans ce cas, la membrane 10 de faible épaisseur est souple et déformée pour présenter des ondulations successives dans la direction longitudinale, de direction transversale correspondant aux rainures 22 entre les nervures 21.

Ces ondulations successives des membranes dans la direction longitudinale des plaques porte-membranes, de part et d'autre d'un espace 13 de réception et de circulation de fluide et de rétentat permet de créer une circulation turbulente du fluide et du rétentat qui est favorable pour éviter le colmatage des membranes et pour favoriser l'effet d'ultrafiltration au contact des membranes.

De plus, la surface externe des barrettes 20a et 20b sur laquelle s'écoule le fluide introduit par les ouvertures 11, qui est légèrement décalée vers l'extérieur par rapport à la surface externe de la membrane produit un effet de tremplin pour le fluide avant qu'il ne vienne en contact avec la membrane. Ainsi, l'écoulement tangentiel du fluide ne risque pas de heurter la partie d'extrémité de la membrane à l'entrée de l'espace de circulation 13.

Sur la figure 9, on a représenté une cassette 16 engagée et fixée sur une barrette de raccordement 15 sur le bord d'une plaque porte-membranes 8.

La cassette 16 est réalisée de préférence en une seule pièce par moulage d'une matière plastique telle que PET (polyéthylène téréphtalate). Une telle matière est parfaitement rigide et transparente et résiste à la plupart des fluides constituant un perméat séparable d'un fluide industriel.

La cassette 16 telle que représentée sur la figure 9 permet de réaliser la visualisation de la circulation du perméat entre la sortie d'un premier espace de récupération de perméat disposé suivant une première face de la plaque porte-membranes et le canal d'évacuation longitudinal et la sortie d'un second espace de récupération de perméat disposé sur la seconde face de la plaque porte-membranes sur laquelle est fixée la cassette 16 et le canal d'évacuation longitudinal. La cassette 16 permet également d'isoler, indépendamment l'un de l'autre, le premier et le second espaces de récupération de perméat, du canal longitudinal d'évacuation de perméat traversant le bord de la plaque porte-membranes sur lequel est fixée la cassette 16.

Les deux parties de la cassette 16 assurant la visualisation et l'arrêt de la circulation de perméat du premier et du second espaces de récupération de perméat sont disposées l'une à la suite de l'autre dans la direction longitudinale de la plaque porte-membranes. La cassette 16 présente une structure totalement symétrique par rapport à un plan de direction transversale perpendiculaire à la plaque porte-membranes. On ne décrira donc en détail que l'une des deux parties de la cassette 16, la seconde partie étant similaire et réalisant des fonctions identiques à la première partie, sur le perméat provenant d'un second espace de récupération.

Il serait bien entendu possible de réaliser les fonctions de visualisation et d'isolation sur les deux espaces de récupération de part et d'autre de la plaque porte-membranes en utilisant deux cassettes ayant des corps séparés. Toutefois, la réalisation de cassettes doubles telles que représentées sur la figure 9 présente des avantages quant à la réalisation et au montage des cassettes.

La cassette 16 est réalisée sous la forme d'un corps présentant des évidements internes constituant dans leur ensemble un conduit de liaison entre deux parties des canaux d'évacuation de perméat associés à un espace de récupération 25.

La demi-cassette 16 destinée à assurer la liaison entre la sortie de l'espace de récupération situé sur la face A de la plaque adaptatrice 8 (voir figure 4) et la lumière 14 du canal longitudinal d'évacuation de perméat comporte un conduit 39 terminé par un ajutage 39a et un conduit 40 terminé par un ajutage 40a parallèles entre eux et de direction transversale par rapport à la plaque porte-membranes destinés à être raccordés aux canaux respectifs 29 et 30 de la plaque porte-membranes 8, par l'intermédiaire des ajutages 39a et 40a de forme oblongue engagés dans les ouvertures de réception 29a et 30a de la barrette de raccordement 15 de la plaque porte-membranes avec interposition d'un joint d'étanchéité torique évitant toute fuite de perméat.

La demi-cassette associée à l'espace de récupération de la face A de la plaque porte-membranes comporte un conduit 38 joignant les conduits 39 et 40, de direction longitudinale, c'est-à-dire parallèle au bord de la plaque porte-membranes et à la barrette de raccordement 15.

Le conduit 38 est prolongé pour déboucher à l'extérieur de la cassette 16, à une extrémité longitudinale de la cassette, par une ouverture de diamètre supérieur au diamètre du canal de jonction des conduits 39 et 40.

Une vis en acier inoxydable 17 comportant successivement une tête de vis profilée 41, une partie filetée 42 et un piston d'obturation 43 peut être engagée dans l'ouverture 38, soit dans une position de fermeture, soit dans une position d'ouverture de la communication entre les conduits 39 et 40.

Sur la figure 9, on a représenté une vis 17 dans une position d'ouverture du conduit 38 reliant le conduit 39 au conduit 40 et une vis 17 dans une position d'ouverture assurant un libre passage entre les conduits 39' et 40'.

Le filetage 42 de la vis 17 en acier inoxydable est auto-taraudant et présente un diamètre extérieur légèrement supérieur au diamètre intérieur de la partie débouchante prolongeant le conduit 38.

Dans la position d'ouverture représentée sur la demi-cassette commandant la circulation de perméat provenant de l'espace de récupération sur la face A de la plaque porte-membranes, l'extrémité du piston d'obturation 43 se trouve en amont du conduit 39 débouchant dans le conduit 38, de sorte que les conduits 39 et 40 sont en communication pour assurer la circulation du perméat.

Dans sa position de fermeture, l'extrémité du piston d'obturation 43 de la vis 17 vient en appui sur un épaulement du canal 38', en aval de l'ouverture du conduit 39' débouchant dans le conduit 38'. Dans cette position, le piston d'obturation 43 interrompt la liaison entre les conduits 39' et 40'.

Le piston d'obturation 43 comporte une gorge dans laquelle est disposé un joint d'étanchéité torique 44 en caoutchouc évitant toute sortie de perméat par l'ouverture débouchante prolongeant le canal de liaison 38.

Le montage de la cassette 16 sur le bord de la plaque porte-membranes 8 est réalisé en engageant les ajutages 39a, 40a, 39'a et 40'a dans les ouvertures correspondantes 29a, 30a, 29'a, 30'a de la barrette de raccordement 15 et en fixant la cassette par des vis engagées dans des ouvertures traversant la cassette telles que les ouvertures 45 et dans des ouvertures correspondantes de la barrette solidaire du bord latéral de la plaque porte-membranes.

Les canaux 29 et 30 de la plaque porte-membranes sont alors raccordés, respectivement, aux canaux 39 et 40 de la cassette 16 et de même les canaux 29' et 30' de la plaque porte-membranes sont raccordés aux conduits de liaison 39' et 40' de la cassette 16.

Pendant le fonctionnement normal du dispositif de filtration au niveau des espaces de récupération de perméat de part et d'autre de la plaque porte-membranes, le perméat circule dans la direction indiquée par les flèches sur les figures 4, 5 et 9 et passe, des zones telles que 24 et 24' de récupération de perméat au canal d'évacuation longitudinal de perméat, par l'intermédiaire des canaux 29, 30, 29', 30' de la plaque porte-membranes et des conduits de liaison correspondants de la cassette 16, comme indiqué par les flèches courbes sur les figures 4, 5 et 9.

La circulation du perméat à l'intérieur de la cassette 16 est parfaitement visible pour un opérateur chargé de la surveillance de l'installation.

En cas de turbidité ou de coloration de la circulation du perméat dans l'une des demi-cassettes traduisant une fuite à travers la membrane de l'espace de récupération correspondant, l'opérateur assure l'isolation de l'espace de récupération en vissant la vis 41 de manière à déplacer le piston d'obturation 43 de sa position d'ouverture représentée sur la droite de la figure 9 à sa position de fermeture représentée sur la gauche de la figure 9. La circulation de perméat est alors interrompue à l'intérieur de la cassette et l'espace de récupération dont la membrane présente une fuite est totalement isolé du canal d'évacuation de perméat. De plus, chaque cassette (ou demi-cassette) étant associée à un espace de récupération particulier, l'opérateur sait quelle membrane présente une fuite. On peut donc effectuer, après arrêt de l'installation, le remplacement de la membrane défectueuse.

Le module représenté sur les figures 1 et 2 comporte trois sous-ensembles 2a, 2b et 2c, les sous-ensembles successifs 2a et 2b et 2b et 2c étant séparés l'un de l'autre par des plaques séparatrices 4a et 4b, de manière que les sous-ensembles successifs 2a, 2b et 2c constitués chacun de quatorze plaques porte-membranes adjacentes soient disposés en série.

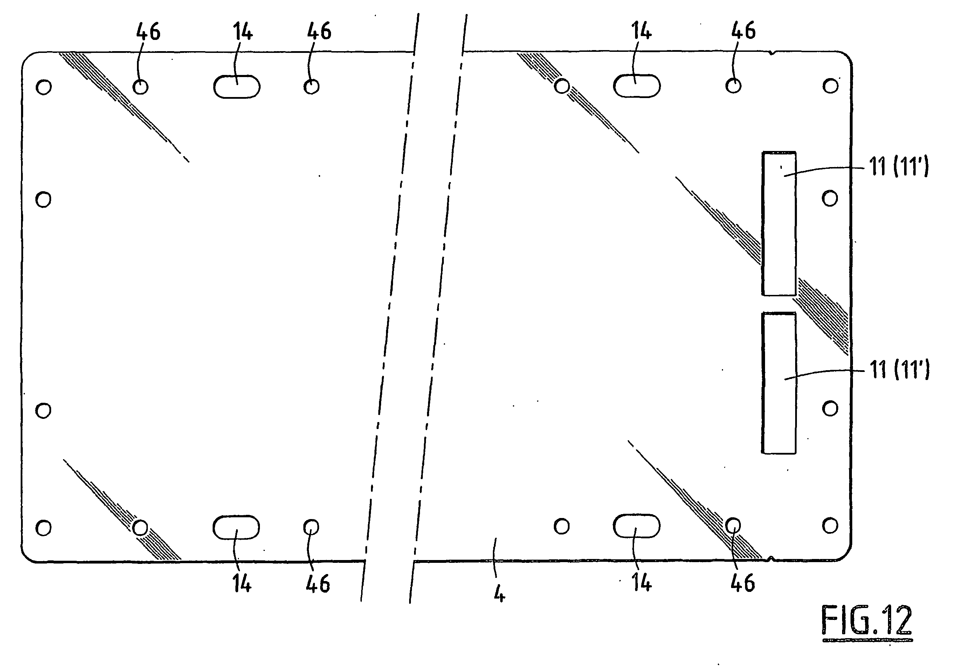

Sur la figure 12, on a représenté une plaque séparatrice 4 qui est une plaque plane métallique, par exemple en acier inoxydable austénitique (304 L ou 316 L) et qui est percée d'ouvertures 46 dans sa partie périphérique pour le passage des tirants d'assemblage et de serrage des éléments du module d'ultrafiltration.

La plaque séparatrice 4 présente une forme et des dimensions identiques à celles d'une plaque porte-membranes mais peut être disposée dans l'une de deux positions inverses l'une de l'autre par rapport aux plaques porte-membranes. Le côté comportant les ouvertures 11 (ou 11') de la plaque séparatrice 4 peut être disposé vers le bas ou vers le haut lors du montage du module, suivant la fonction recherchée pour la plaque séparatrice dans le montage en série des sous-ensembles du module.

La plaque séparatrice 4 est traversée par quatre ouvertures 14 analogues quant à leur forme et dimensions aux ouvertures 14 de la plaque adaptatrice disposées suivant deux ensembles symétriques par rapport à une médiane de direction transversale de la plaque séparatrice, dans des dispositions analogues aux ouvertures 14 des plaques porte-membranes.

Comme il est visible sur la figure 2, la plaque séparatrice 4a est disposée avec ses ouvertures de forme rectangulaire en partie supérieure dans l'alignement des ouvertures 11' de passage de rétentat des plaques porte-membranes 8 du premier sous-ensemble 2a.

La seconde plaque séparatrice 4b est disposée dans une position inverse de la plaque 4a, les ouvertures de forme rectangulaire de la plaque séparatrice 4b étant disposées en partie inférieure, dans le prolongement des ouvertures 11' des plaques porte-membranes du second sous-ensemble 2b assurant le passage du rétentat.

Les plaques séparatrices peuvent être, à titre de variante, en matière plastique, par exemple en chlorure de polyvinyle (PVC).

A la sortie du sous-ensemble 2a, le rétentat traversant les ouvertures 11 à la partie supérieure de la plaque séparatrice 4a pénètre dans les ouvertures alignées 11 à la partie supérieure des plaques porte-membranes du second sous-ensemble 2b pour être distribué dans les espaces de réception et de circulation de fluide du second sous-ensemble 2b. Le rétentat sortant du premier sous-ensemble 2a constitue donc le fluide à filtrer par le second sous-ensemble 2b qui est placé en série par rapport au premier sous-ensemble 2a.

Le rétentat obtenu à la sortie des espaces de réception et de circulation de fluide parvient dans les ouvertures 11' à la partie inférieure des plaques porte-membranes du second sous-ensemble, pour être transporté vers la sortie du second sous-ensemble.

Le second sous-ensemble fonctionne donc avec un sens inversé par rapport au premier sous-ensemble, quant à la circulation du fluide à filtrer et du rétentat.

A la sortie du second sous-ensemble 2b, le rétentat traverse les ouvertures 11' de la plaque 4b, dans une position inverse par rapport à la plaque séparatrice 4a, pour pénétrer dans les ouvertures 11 des plaques porte-membranes du troisième sous-ensemble 2c qui constituent par leur juxtaposition un canal de distribution de fluide dans les espaces successifs de réception et de circulation du troisième sous-ensemble 2c.

Le rétentat obtenu en sortie du module 2c est récupéré à l'intérieur des lumières 11' à la partie supérieure du sous-ensemble 2c puis évacué par l'intermédiaire d'une ouverture et d'un ajutage 5b de sortie du module relié à une conduite de récupération du rétentat, c'est-à-dire une conduite de récupération de peinture sur laquelle est placée une pompe permettant de recycler la peinture dans le bac à peinture par cataphorèse.

Le troisième sous-ensemble 2c fonctionne donc dans le même sens que le premier sous-ensemble 2a.

Les ouvertures 11 des plaques porte-membranes du troisième sous-ensemble 2c disposées à la partie inférieure des plaques porte-membranes constituent par leur juxtaposition un canal de distribution du rétentat provenant du second sous-ensemble 2b qui est fermé à son extrémité de sortie, par la plaque de contention 3b dont les ouvertures inférieures sont fermées par des bouchons, comme il sera expliqué par la suite.

Quel que soit le sous-ensemble, la récupération de perméat est réalisée en partie supérieure du sous-ensemble par un canal de récupération longitudinal unique sur chacun des côtés de l'ensemble du module, les plaques séparatrices 4a et 4b comportant des ouvertures 14 susceptibles d'assurer la communication entre deux sous-ensembles successifs, au voisinage de leurs deux extrémités. Quelle que soit la position de la plaque séparatrice, la liaison entre les parties successives des canaux de récupération longitudinaux des sous-ensembles situés en partie haute du module est assurée. Les cassettes 16 permettant la surveillance de l'installation sont ainsi toujours situées en partie supérieure du module d'ultrafiltration. Le perméat qui est récupéré au niveau de la première plaque de contention 3a par les ajutages 6a circule dans la direction longitudinale dans un sens opposé au sens général de circulation du fluide à travers le module.

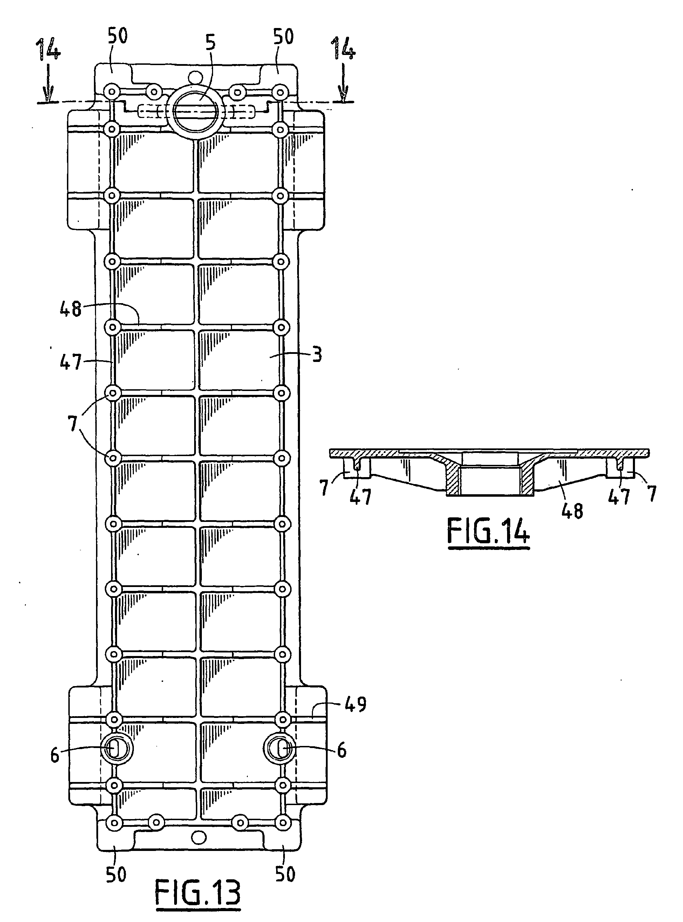

Sur la figure 13, on a représenté une plaque de contention 3 qui est de forme standard, la plaque 3a ou la plaque 3b aux extrémités du module représenté sur la figure 2 étant identiques mais placées dans des dispositions inversées l'une par rapport à l'autre, quant à leur partie haute et basse.

La plaque de contention 3 qui peut être réalisée en alliage d'aluminium ou en matière plastique ou composite présente une structure permettant d'assurer une très grande rigidité de la plaque qui doit supporter les forces de serrage de l'ensemble des tirants 8. La plaque qui est réalisée sous forme moulée comporte une partie plane renforcée par des nervures longitudinales 47 et par des nervures transversales 48 perpendiculaires aux nervures longitudinales se recoupant à angle droit au niveau de parties de jonction renforcées qui peuvent constituer, à la périphérie de la plaque de contention 3, des oeilletons 7 d'engagement et de serrage des tirants 8.

La face plane interne de la plaque de contention destinée à venir en contact avec un joint d'étanchéité 9 ou un intercalaire en matière plastique est de préférence revêtue de rilsan.

Suivant ses bords longitudinaux, la plaque de contention 3 comporte quatre parties en saillie 49 destinées à assurer, deux par deux suivant le sens de montage de la plaque de contention 3, la protection des ensembles de cassettes 16 en saillie par rapport aux bords latéraux des plaques porte-membranes dans leur partie supérieure.

La disposition des parties en saillie 49 suivant les deux bords longitudinaux de la plaque de contention 3 et dans des dispositions symétriques par rapport à un plan transversal médian de la plaque permet d'utiliser des plaques de contention identiques dans une première position (celle de la plaque 3a) et dans une seconde position inversée (celle de la plaque 3b sur la figure 2).

De même, des pieds 50 sont prévus aux deux extrémités de la plaque de contention 3 pour servir d'appui au module quelle que soit la position de la plaque de contention.

De manière générale, la plaque de contention est totalement symétrique par rapport à un plan médian longitudinal et par rapport à un plan médian transversal, à part la réalisation des ouvertures 5 et 6 assurant le branchement du module, soit à une arrivée de fluide à filtrer, soit à des tuyauteries de récupération de perméat, soit à des tuyauteries de récupération de rétentat.

La disposition des plaques dans l'une de leurs deux positions et l'utilisation de bouchons permet d'adapter facilement le module à différentes configurations d'installations industrielles.

Lorsque le module est assemblé et raccordé par l'un des ajutages d'une première plaque de contention à une conduite d'alimentation en fluide sous pression, le fluide est distribué dans les espaces de réception et de circulation de fluide successifs 13 d'un premier sous-ensemble (ou d'un sous-ensemble unique de l'installation) et circule dans la direction longitudinale des plaques porte-membranes et des membranes de telle manière que le fluide balaie la surface extérieure des membranes en vis-à-vis délimitant les espaces de circulation et qu'un perméat se sépare du fluide, de sorte que le fluide séparé de la première fraction constituée par le perméat constitue le rétentat. Le fluide à filtrer et le rétentat circulent à grande vitesse au contact des membranes, ce qui assure un auto-nettoyage des membranes et donc limite le colmatage pendant l'utilisation du dispositif.

Le rétentat peut être prélevé et utilisé à la sortie d'un premier sous-ensemble ou, au contraire, être envoyé comme fluide à filtrer dans un second sous-ensemble. Un troisième sous-ensemble peut être placé en série à la suite du second ensemble pour recevoir le second rétentat, à la sortie du second sous-ensemble. Le rétentat récupéré à la sortie de l'installation qui contient des pigments et liants de la peinture, dans le cas du traitement d'une peinture, peut être réutilisé et par exemple renvoyé dans le bac de peinture d'une installation de peinture par cataphorèse.

Le perméat est récupéré indifféremment au niveau de chacun des sous-ensembles dans un canal d'évacuation commun. Dans le cas du traitement de séparation des constituants d'une peinture pour carrosseries, le perméat contenant le solvant de la peinture et qui est constitué en grande partie d'eau déminéralisée peut être réutilisé pour le rinçage des carrosseries sortant des bains de peinture, par exemple de cataphorèse.

On peut utiliser des modules comportant un nombre quelconque de sous-ensembles successifs placés en série, suivant les besoins de filtration et la performance des membranes.

Dans tous les cas, les modules de filtration suivant l'invention permettent de surveiller en permanence le fonctionnement et l'intégrité de toutes les membranes utilisées, de déterminer la localisation d'une membrane présentant une fuite et d'isoler un espace de récupération de perméat comportant une membrane défectueuse, jusqu'au remplacement de cette membrane, ce qui évite de polluer, même faiblement, le perméat récupéré dans l'installation.

Dans le cas du module représenté sur la figure 2, le perméat est récupéré sur la face d'entrée du module par les ajutages 6a et 6b auxquels peuvent être reliées des conduites. Une pompe située en amont du module permet de faire circuler la peinture dans le module. Une pression induite dans le module permet de maintenir une différence de pression parfaitement réglée à travers les membranes d'ultrafiltration pendant le traitement de séparation.

Cette pression trans-membranaire permet d'assurer le passage du perméat à travers les membranes et la circulation du perméat à débit sensiblement constant jusqu'à des moyens de réutilisation du perméat (par exemple des buses de rinçage de carrosseries).

L'invention ne se limite pas strictement aux modes de réalisation qui ont été décrits.

C'est ainsi que l'invention peut être mise en oeuvre dans le cas de procédés de filtration utilisant des membranes de divers types par exemple des membranes de microfiltration comportant des pores de dimensions micrométriques au lieu de membranes d'ultrafiltration comportant des pores de dimensions nanométriques. L'invention peut être utilisée en dehors de l'application préférentielle décrite concernant la séparation de solvant et de peinture provenant de bacs de peinture ou de nettoyage d'une installation de peinture par cataphorèse.

L'invention peut être utilisée pour la filtration de liquides de natures très variées ou même pour la filtration de fluides quelconques, par exemple des gaz.

## Revendications

1. Dispositif de séparation d'un fluide en une première et en au moins une seconde fraction par mise en contact du fluide avec une pluralité de membranes de filtration (10), comportant au moins un sous-ensemble (2a, 2b, 2c) de plaques porte-membranes (8) sur chacune des faces opposées desquelles est fixée une membrane de filtration (10) rapportée sur une partie de la plaque porte-membrane (8) comportant des moyens de guidage de fluide (21, 22) pour le drainage, à l'intérieur d'un espace de récupération (25) délimité entre la membrane (10) et la plaque porte-membranes (8), de la première fraction de fluide traversant la membrane (10) vers un ensemble de canaux d'évacuation (29, 30, 29', 30', 39, 40, 39', 40', 14) de la première fraction du fluide dans une partie adjacente à un bord latéral de la plaque porte-membranes (8) et l'obtention de turbulences sur l'écoulement du fluide, les plaques porte-membranes (8) de l'ensemble étant rapportées l'une contre l'autre de manière étanche à leur partie périphérique, deux plaques porte-membranes (8) adjacentes délimitant un espace de réception et de circulation (13) du fluide entre deux membranes (10) fixées sur des faces en vis-à-vis de deux plaques porte-membranes (8) adjacentes, des moyens d'alimentation (11) en fluide des espaces de réception et de circulation (13) du sous-ensemble (2a, 2b, 2c), des moyens de récupération (24, 24') de la première fraction du fluide en communication avec les ensembles de canaux d'évacuation (29, 30, 29', 30', 39, 40, 39', 40', 14) de la première fraction du fluide et des moyens d'évacuation (11') du fluide séparé de la première fraction constituant la deuxième fraction du fluide, **caractérisé par le fait que** les ensembles de canaux d'évacuation (29, 30, 29', 30', 39, 40, 39', 40', 14) de la première fraction du fluide comportent, pour chacune des plaques porte-membranes (8) du sous-ensemble (2a, 2b, 2c) et pour chacun des espaces de récupération (25), une portion (38, 39, 40, 38', 39', 40') ménagée à l'intérieur d'une partie rigide adjacente au bord latéral de la plaque porte-membranes (8) associée à un moyen d'obturation (17) qui peut être actionné pour arrêter la circulation du premier fluide dans l'espace de récupération (25) correspondant.

2. Dispositif suivant la revendication 1, **caractérisé par le fait que** la partie rigide (16) adjacente au bord latéral de la plaque porte-membranes est une pièce rapportée en matière plastique transparente en saillie latérale par rapport au bord latéral de la plaque porte-membranes (8) de manière à rendre visible une circulation de la première fraction du fluide dans la portion des canaux d'évacuation ménagée à l'intérieur de la pièce (16) en saillie latérale par rapport au bord latéral de la plaque porte-membranes (8).

3. Dispositif suivant la revendication 2, **caractérisé par le fait que** la pièce rigide (16) en saillie radiale par rapport à un bord latéral de la plaque porte-membranes (8) est en polyéthylène téréphtalate.

4. Dispositif suivant l'une quelconque des revendications 2 et 3, **caractérisé par le fait que** la pièce rigide (16) en saillie latérale par rapport au bord latéral de la plaque porte-membrane (8) est une cassette comportant un corps en une seule pièce dans lequel sont ménagés des premiers conduits (38, 39, 40) de liaison d'un canal d'un premier ensemble de canaux d'évacuation de la première fraction du fluide avec des premiers moyens de récupération (24) de la première fraction du fluide dans un premier espace de récupération (25) entre une première face de la plaque porte-membranes (8) et une première membrane (10) et des seconds conduits de liaison d'un canal d'un second ensemble de canaux d'évacuation du premier fluide avec des seconds moyens de récupération (24') du premier fluide dans un second espace de récupération (25) du premier fluide entre la seconde face de la plaque porte-membranes (8) et une seconde membrane (10) fixée sur la seconde face de la plaque porte-membranes (8), les premiers conduits de liaison et les seconds conduits de liaison de la cassette (16) étant disposés dans des parties de la cassette successives dans une direction longitudinale suivant le bord latéral de la plaque porte-membranes (8) dirigé suivant la direction de circulation du fluide au contact des membranes (10) portées par la plaque porte-membranes (8).

5. Dispositif suivant l'une quelconque des revendications 2 à 4, **caractérisé par le fait que** les pièces rigides (16) en saillie latérale par rapport à un bord latéral de deux plaques porte-membranes adjacentes (8a, 8b) sont fixées suivant des bords latéraux parallèles des plaques porte-membranes adjacentes (8a, 8b) situés de part et d'autre du sous-ensemble du dispositif (1) dans une direction transversale perpendiculaire à la direction longitudinale de circulation du fluide dans chacun des espaces de circulation (13) et à la direction longitudinale du sous-ensemble suivant laquelle est réalisée l'évacuation de la première et de la deuxième fractions du fluide.

6. Dispositif suivant l'une quelconque des revendications 2 à 5, **caractérisé par le fait que** le moyen d'obturation de la portion de l'ensemble de canaux d'évacuation du premier fluide ménagée à l'intérieur de la pièce rigide (16) en saillie radiale par rapport à un bord latéral de la plaque porte-membranes (8) est une vis (17) comportant une partie filetée destinée à être vissée dans une ouverture de la pièce rigide débouchant à l'extérieur de la pièce rigide (16) et communiquant avec la portion de l'ensemble de canaux d'évacuation ménagée dans la pièce rigide (16) et un piston d'obturation (43) mobile entre une position d'ouverture et une position de fermeture de la portion de l'ensemble de canaux d'évacuation du premier fluide ménagée à l'intérieur de la pièce rigide (16).

7. Dispositif selon la revendication 1, **caractérisé par le fait que** la partie rigide (16) adjacente au bord latéral de la plaque porte-membranes (8) est une partie intégrante de la plaque porte-membrane (8).

8. Dispositif suivant l'une quelconque des revendications 1 à 7, **caractérisé par le fait que** l'ensemble de canaux d'évacuation de la première fraction de fluide, les moyens d'alimentation (11) en fluide des espaces de circulation (13) du sous-ensemble (2a, 2b, 2c) et les moyens de récupération de la seconde fraction de fluide (11') sont constitués par des ouvertures traversant les plaques porte-membranes (8) juxtaposées, lors de l'assemblage des plaques porte-membranes (8) en position adjacente.

9. Dispositif suivant l'une quelconque des revendications 1 à 8, **caractérisé par le fait que** les moyens de récupération (24, 24') de la première fraction du fluide dans un espace de récupération (25) délimité entre une membrane (10) et une face de la plaque porte-membranes (8) comportent des nervures (23) sensiblement rectilignes de direction longitudinale et discontinues alignées au voisinage d'un bord latéral dans une direction longitudinale de la plaque porte-membranes (8) délimitant entre elles des chicanes de passage du premier fluide et de guidage du premier fluide vers l'ensemble de canaux d'évacuation de la première fraction du fluide, les parties en saillie sur la face de la plaque porte-membranes (8) rectilignes et discontinues assurant également un maintien de la membrane (9) délimitant l'espace de récupération (25) avec la face de la plaque porte-membranes (8).

10. Dispositif suivant l'une quelconque des revendications 1 à 9, **caractérisé par le fait que** l'espacement entre les plaques porte-membranes (8) et l'épaisseur des zones de réception et de circulation de fluide (13) entre deux membranes (10) en vis-à-vis portées par deux plaques porte-membranes (8) adjacentes est réglé par l'un des moyens suivants :
- joint d'étanchéité (9) intercalé entre deux plaques porte-membranes successives comportant, à sa périphérie destinée à venir en contact avec la partie périphérique d'une plaque porte-membranes (8), au moins une partie en saillie (35) par rapport à une surface du joint parallèle à une plaque porte-membranes, de telle sorte que l'épaisseur du joint soit maximale suivant la partie en saillie (35),
- intercalaire en matière plastique entre les parties périphériques de deux plaques porte-membranes (8) adjacentes,
- nervure en saillie sur une partie périphérique d'une plaque porte-membrane.

11. Dispositif suivant l'une quelconque des revendications 1 à 10, **caractérisé par le fait que** le joint d'étanchéité périphérique (9) destiné à être intercalé entre deux plaques porte-membranes (8) qui présente la forme générale d'un cadre rectangulaire comporte une partie de joint centrale (36) disposée sensiblement suivant une médiane de direction longitudinale du joint (9) en forme de cadre rectangulaire, de manière à limiter ou empêcher les vibrations des membranes (10) portées par les plaques porte-membranes (8) entre lesquelles est intercalé le joint d'étanchéité (9).

12. Dispositif suivant l'une quelconque des revendications 1 à 11, comportant au moins un sous-ensemble (2a, 2b, 2c) de plaques porte-membranes (8) de forme sensiblement rectangulaire disposé de manière que la direction longitudinale des plaques porte-membranes (8) soit verticale, **caractérisé par le fait que** les parties rigides (16) adjacentes à un bord latéral longitudinal de la plaque porte-membranes (8) sont situées à la partie supérieure des bords latéraux longitudinaux des plaques porte-membranes (8).

13. Dispositif suivant l'une quelconque des revendications 1 à 12, **caractérisé par le fait qu'**il comporte au moins deux sous-ensembles (2a, 2b, 2c) de plaques porte-membranes (8) séparés l'un de l'autre par des plaques séparatrices (4, 4a, 7b) et maintenus assemblés entre deux plaques de contention d'extrémité (3a, 3b), les plaques séparatrices étant traversées par au moins une ouverture (11, 11') de passage du fluide ou de la seconde fraction du fluide à une extrémité longitudinale et par deux jeux de deux ouvertures latérales (34) de passage de la seconde fraction du fluide dans des parties d'extrémité longitudinales et dans des zones latérales des plaques séparatrices (4), de manière à pouvoir réaliser un montage en série des sous-ensembles (2a, 2b, 2c).

14. Dispositif suivant la revendication 13, **caractérisé par le fait que** les plaques de contention (3a, 3b) à chacune des extrémités du dispositif constitué d'au moins deux sous-ensembles (2a, 2b, 2c) comportent des parties en saillie latérale (50) de protection des parties rigides (16) adjacentes aux bords latéraux des plaques porte-membranes (8) placées de manière juxtaposée lors de l'assemblage des plaques porte-membranes (8) et des sous-ensembles du dispositif de séparation (1).

15. Dispositif suivant l'une quelconque des revendications 1 à 14, **caractérisé par le fait que** les membranes (10) sont des membranes de filtration comportant des pores de dimensions nanométriques ou micrométriques, la première fraction du fluide étant un perméat obtenu par ultrafiltration ou microfiltration et la seconde fraction du fluide un rétentat.

16. Utilisation d'un dispositif suivant l'une quelconque des revendications 1 à 15 pour la séparation de solvant et de peinture mise en oeuvre dans une installation de peinture industrielle par cataphorèse.

## Claims

1. Device for the separation of a fluid into a first fraction and at least one second fraction by bringing the fluid into contact with a plurality of filtration membranes (10), comprising at least one sub-assembly (2a, 2b, 2c) of membrane-support plates (8) on each of the opposite faces of which is fixed a filtration membrane (10), mounted on a part of the membrane-support plate (8) comprising means for guiding fluid (21, 22) for the drainage, inside of a recovery space (25) delimited between the membrane (10) and the membrane-support plate (8), of the first fraction of the fluid passing through the membrane (10) towards a set of evacuation channels (29, 30, 29', 30', 39, 40, 39', 40', 14) of the first fraction of the fluid into a part adjacent to a lateral edge of the membrane-support plate (8) and for obtaining turbulence on the outflow of the fluid, the membrane-support plates (8) of the assembly being mounted against one another in a watertight manner, at their peripheral part, two adjacent membrane-support plates (8) delimiting a space for the reception and circulation (13) of the fluid between two membranes (10) fixed on opposing faces of two adjacent membrane-support plates (8), means for supplying (11) the reception and circulation spaces (13) of the sub-assembly (2a, 2b, 2c) with fluid, means for recovery (24, 24') of the first fraction of fluid in communication with assemblies of channels (29, 30, 29', 30', 39, 40, 39', 40', 14) for evacuation of the first fraction of fluid and means for evacuation (11') of the fluid separated from the first fraction constituting the second fraction of the fluid, **characterized by** the fact that the assemblies of evacuation channels (29, 30, 29', 30', 39, 40, 39', 40', 14) of the first fraction of the fluid comprise, for each of the membrane-support plates (8) of the sub-assembly (2a, 2b, 2c) and for each of the recovery spaces (25), a portion (38, 39, 40, 38', 39', 40') provided inside a rigid part adjacent to the lateral edge of the membrane-support plate (8) associated with plugging means (17) which can be actuated in order to stop the circulation of the first fluid in the corresponding recovery space (25).

2. Device according to claim 1, **characterized by** the fact that the rigid part (16) adjacent to the lateral edge of the membrane-support plate is a piece made from transparent plastic material mounted projecting laterally relative to the lateral edge of the membrane-support plate (8) so as to render visible a circulation of the first fraction of the fluid in the portion of the evacuation channels provided inside the piece (16) projecting laterally relative to the lateral edge of the membrane-support plate (8).

3. Device according to claim 2, **characterized by** the fact that the rigid piece (16) projecting radially relative to a lateral edge of the membrane-support plate (8) is made of polyethylene terephthalate.

4. Device according to any one of claims 2 and 3, **characterized by** the fact that the rigid piece (16) projecting laterally relative to the lateral edge of the membrane-support plate (8) is a cassette comprising a body in a single piece in which there are provided first conduits (38, 39, 40) connecting a channel of a first assembly of evacuation channels of the first fraction of the fluid with first means of recovery (24) of the first fraction of the fluid in a first recovery space (25) between a first face of the membrane-support plate (8) and a first membrane (10) and second conduits connecting a channel of a second assembly of channels of evacuation of the first fluid with second means of recovery (24') of the first fluid in a second recovery space (25) of the first fluid between the second face of the membrane-support plate (8) and a second membrane (10) fixed on the second face of the membrane-support plate (8), the first connecting conduits and the second connecting conduits of the cassette (16) being arranged in successive parts of the cassette in a longitudinal direction along the lateral edge of the membrane-support plate (8) directed following the direction of circulation of the fluid in contact with the membranes (10) carried by the membrane-support plate (8).

5. Device according to any one of claims 2 to 4, **characterized by** the fact that the rigid pieces (16) projecting laterally relative to a lateral edge of two adjacent membrane-support plates (8a, 8b) are fixed following parallel lateral edges of the adjacent membrane-support plates (8a, 8b) situated on both sides of the sub-assembly of the device (1) in a transversal direction perpendicular to the longitudinal direction of circulation of the fluid in each of the circulation spaces (13) and to the longitudinal direction of the sub-assembly according to which the evacuation of the first and second fractions of the fluid is carried out.

6. Device according to any one of claims 2 to 5, **characterized by** the fact that the means for plugging the portion of the assembly of channels for evacuation of the first fluid provided inside the rigid piece (16) projecting radially relative to a lateral edge of the membrane-support plate (8) is a screw (17) comprising a threaded part intended to be screwed into an opening in the rigid piece opening outside the rigid piece (16) and connected to the portion of the assembly of evacuation channels provided in the rigid piece (16) and a plugging piston (43) mobile between an opening position and a closing position of the portion of the assembly of channels for evacuation of the first fluid provided inside the rigid piece (16).

7. Device according to claim 1, **characterized by** the fact that the rigid part (16) adjacent to the lateral edge of the membrane-support plate (8) is an integral part of the membrane-support plate (8).

8. Device according to any one of claims 1 to 7, **characterized by** the fact that the assembly of channels for evacuation of the first fraction of fluid, the means for supplying (11) the circulation spaces (13) of the sub-assembly (2a, 2b, 2c) with fluid and the means for recovery of the second fraction of fluid (11') are constituted by openings passing through the juxtaposed membrane-support plates (8), during the assembly of the membrane-support plates (8) in adjacent position.

9. Device according to any one of claims 1 to 8, **characterized by** the fact that the means for recovery (24, 24') of the first fraction of the fluid in a recovery space (25) delimited between a membrane (10) and a face of the membrane-support plate (8) comprise ribs (23) which are substantially straight in a longitudinal direction and discontinuous, aligned in the vicinity of a lateral edge in a longitudinal direction of the membrane-support plate (8) delimiting between them baffles for the passage of the first fluid and for guiding the first fluid towards the assembly of evacuation channels of the first fraction of the fluid, the straight and discontinuous parts projecting on the face of the membrane-support plate (8) also ensuring maintenance of the membrane (9) delimiting the recovery space (25) with the face of the membrane-support plate (8).

10. Device according to any one of claims 1 to 9, **characterized by** the fact that the spacing between the membrane-support plates (8) and the thickness of the zones for reception and circulation of fluid (13) between two opposing membranes (10) carried by two adjacent membrane-support plates (8) is controlled by one of the following means:
- sealing device (9) inserted between two successive membrane-support plates comprising, at its periphery intended to come into contact with the peripheral part of a membrane-support plate (8), at least one part (35) projecting relative to a surface of the seal parallel to a membrane-support plate, so that the thickness of the seal is a maximum following the projecting part (35),
- plastic insert between the peripheral parts of two adjacent membrane-support plates (8),
- rib projecting over a peripheral part of a membrane-support plate.

11. Device according to any one of claims 1 to 10, **characterized by** the fact that the peripheral sealing device (9) intended to be inserted between two membrane-support plates (8) which has the general shape of a rectangular frame comprises a central sealing part (36) arranged substantially following a median line in a longitudinal direction of the seal (9) in the shape of a rectangular frame, so as to limit or prevent the vibrations of the membranes (10) carried by the membrane-support plates (8) between which the sealing device (9) is inserted.

12. Device according to any one of claims 1 to 11, comprising at least one sub-assembly (2a, 2b, 2c) of membrane-support plates (8) of a substantially rectangular shape arranged so that the longitudinal direction of the membrane-support plates (8) is vertical, **characterized by** the fact that the rigid parts (16) adjacent to a longitudinal lateral edge of the membrane-support plate (8) are situated in the upper part of the longitudinal lateral edges of the membrane-support plates (8).

13. Device according to any one of claims 1 to 12, **characterized by** the fact that it comprises at least two sub-assemblies (2a, 2b, 2c) of membrane-support plates (8) separated from each other by separating plates (4, 4a, 7b) and held assembled between two end retaining plates (3a, 3b), the separating plates being passed through by at least one opening (11, 11') for the passage of the fluid or the second fraction of the fluid at one longitudinal end, and by two sets of two lateral openings (34) for the passage of the second fraction of the fluid into longitudinal end parts and into lateral zones of the separating plates (4), so as to be able to carry out an assembly in series of the sub-assemblies (2a, 2b, 2c).

14. Device according to claim 13, **characterized by** the fact that the retaining plates (3a, 3b) at each of the ends of the device constituted by at least two sub-assemblies (2a, 2b, 2c) comprise parts projecting laterally (50) for protection of the rigid parts (16) adjacent to the lateral edges of the membrane-support plates (8) placed in a juxtaposed manner during the assembly of the membrane-support plates (8) and of the sub-assemblies of the separation device (1).

15. Device according to any one of claims 1 to 14, **characterized by** the fact that the membranes (10) are filter membranes comprising pores of nanometric or micrometric dimensions, the first fraction of the fluid being a permeate obtained by ultrafiltration or microfiltration and the second fraction of the fluid being a retentate

16. Use of a device according to any one of claims 1 to 15 for the separation of solvent and paint implemented in an industrial cataphoresis painting installation.

## Patentansprüche

1. Vorrichtung zum Trennen eines Fluids in eine erste und mindestens eine zweite Fraktion durch Inkontaktbringen des Fluids mit mehreren Filtermembranen (10), die mindestens eine Untereinheit (2a, 2b, 2c) aus Membranenträgerplatten (8) aufweist, auf welchen sich auf jeder ihrer entgegen gesetzten Seiten eine Filtermembran (10) befestigt befindet, die auf einen Teil der Membranenträgerplatte (8) angebaut ist, der Mittel zum Fluidführen (21, 22) zum Dränieren im Inneren eines Rückgewinnungsraums (25), der zwischen der Membran (10) und der Membranenträgerplatte (8) abgegrenzt ist, der ersten Fluidfraktion, die die Membran (10) durchquert, zu einer Einheit Ableitungskanäle (29, 30, 29', 30', 39, 40, 39' 40', 14) der ersten Fluidfraktion in einen neben einem seitlichen Rand der Membranenträgerplatte (8) liegenden Teil und zum Erzielen von Turbulenzen auf dem Abfließen des Fluids aufweist, wobei die Membranenträgerplatten (8) der Einheit eine an der anderen dicht an ihrem peripheren Teil angebaut sind, wobei zwei benachbarte Membranenträgerplatten (8) einen Aufnahme- und Zirkulationsraum (13) des Fluids zwischen zwei Membranen (10) abgrenzen, die auf gegenüberliegenden Seiten zweier benachbarter Membranenträgerplatten (8) befestigt sind, Mittel zum Zuführen (11) von Fluid zu den Empfangs- und Zirkulationsräumen (13) der Untereinheit (2a, 2b, 2c), Mittel zum Zurückgewinnen (24, 24') der ersten Fraktion des Fluids, die mit den Einheiten von Ableitungskanälen (29, 30, 29', 30', 39, 40, 39', 40', 14) der ersten Fraktion des Fluids kommunizieren, und Mittel zum Ableiten (11') des von der ersten Fraktion getrennten Fluids, das die zweite Fraktion des Fluids bildet, **dadurch gekennzeichnet, dass** die Einheiten von Ableitungskanälen (29, 30, 29', 30', 39, 40, 39', 40', 14) der ersten Fraktion des Fluids für jede der Membranenträgerplatten (8) der Untereinheit (2a, 2b, 2c) und für jeden der Rückgewinnungsräume (25) einen Abschnitt (38, 39, 40, 38', 39', 40') aufweisen, der im Inneren eines starren Teils neben dem seitlichen Rand der. Membranenträgerplatte (8) eingerichtet ist, die mit einem Verschlussmittel (17) verbunden ist, das betätigt werden kann, um die Zirkulation des ersten Fluids in dem entsprechenden Rückgewinnungsraum (25) zu stoppen.

2. Vorrichtung nach Anspruch 1, **dadurch gekennzeichnet, dass** der starre Teil (16) neben dem seitlichen Rand jeder Membranenträgerplatte ein angebauter Teil aus durchsichtigem Kunststoff ist, der seitlich in Bezug auf den seitlichen Rand der Membranenträgerplatte (8) derart vorsteht, dass eine Zirkulation der ersten Fraktion des Fluids in dem Abschnitt der Ableitungskanäle, der im Inneren des Teils (16), der in Bezug auf den seitlichen Rand der Membranenträgerplatte (8) vorsteht, angeordnet ist, sichtbar gemacht wird.

3. Vorrichtung nach Anspruch 2, **dadurch gekennzeichnet, dass** der starre Teil (16), der radial in Bezug auf einen seitlichen Rand der Membranenträgerplatte (8) vorsteht, aus Polyethylenterephtalat besteht.

4. Vorrichtung nach einem der Ansprüche 2 und 3, **dadurch gekennzeichnet, dass** der starre Teil (16), der seitlich in Bezug auf den seitlichen Rand der Membranenträgerplatte (8) vorsteht, eine Kassette ist, die einen einstückigen Körper aufweist, in dem erste Leitungen (38, 39, 40) zum Verbinden eines Kanals einer ersten Einheit von Ableitungskanälen der ersten Fraktion des Fluids mit ersten Rückgewinnungsmitteln (24) der ersten Fraktion des Fluids in einem ersten Rückgewinnungsraum (25) zwischen einer ersten Seite der Membranenträgerplatte (8) und einer ersten Membran (10) und zweite Leitungen zum Verbinden eines Kanals einer zweiten Einheit von Ableitungskanälen des ersten Fluids mit zweiten Rückgewinnungsmitteln (24') des ersten Fluids in einem zweiten Rückgewinnungsraum (25) des ersten Fluids zwischen der zweiten Seite der Membranenträgerplatte (8) und einer zweiten Membran eingerichtet sind, die auf der zweiten Seite der Membranenträgerplatte (8) befestigt ist, wobei die ersten Verbindungsleitungen und die zweiten Verbindungsleitungen der Kassette (16) in Teilen der Kassette angeordnet sind, die in eine Längsrichtung entlang des seitlichen Rands der Membranenträgerplatte (8) entlang der Zirkulationsrichtung des Fluids in Berührung mit den Membranen (10), die von der Membranenträgerplatte (8) getragen werden, aufeinander folgenden.

5. Vorrichtung nach einem der Ansprüche 2 bis 4, **dadurch gekennzeichnet, dass** die starren Teile (16), die seitlich in Bezug auf einen seitlichen Rand von zwei benachbarten Membranenträgerplatten (8a, 8b) vorstehen, entlang paralleler seitlicher Ränder der benachbarten Membranenträgerplatten (8a, 8b) befestigt sind, die sich auf jeder Seite der Untereinheit der Vorrichtung (1) in eine Richtung quer senkrecht zu der Längszirkulationsrichtung des Fluids in jedem der Zirkulationsräume (13) und in die Längsrichtung der Untereinheit befinden, entlang welcher das Ableiten der ersten und der zweiten Fraktion des Fluids ausgeführt wird.

6. Vorrichtung nach einem der Ansprüche 2 bis 5, **dadurch gekennzeichnet, dass** das Verschlussmittel des Abschnitts der Einheit von Ableitungskanälen des ersten Fluids, der im Inneren des starren Teils (16) angeordnet ist, der radial in Bezug auf einen seitlichen Rand der Membranenträgerplatte (8) vorsteht, eine Schraube (17) ist, die einen Gewindeteil aufweist, der dazu bestimmt ist, in eine Öffnung des starren Teils geschraubt zu werden, die außerhalb des starren Teils (16) mündet und mit dem Abschnitt der Einheit von Ableitungskanälen kommuniziert, der in dem starren Teil (16) eingerichtet ist, und einen Verschlusskolben (43) aufweist, der zwischen einer Öffnungs- und einer Schließposition des Abschnitts der Einheit von Ableitungskanälen des ersten Fluids, der im Inneren des starren Teils (16) eingerichtet ist, beweglich ist.

7. Vorrichtung nach Anspruch 1, **dadurch gekennzeichnet, dass** der starre Teil (16) neben dem seitlichen Rand der Membranenträgerplatte (8) ein fester Bestandteil der Membranenträgerplatte (8) ist.

8. Vorrichtung nach einem der Ansprüche 1 bis 7, **dadurch gekennzeichnet, dass** die Einheit von Ableitungskanälen der ersten Fluidfraktion, die Mittel zum Zuführen (11) von Fluid zu den Zirkulationsräumen (13) der Untereinheit (2a, 2b, 2c) und die Rückgewinnungsmittel der zweiten Fluidfraktion (11') aus Öffnungen bestehen, die nebeneinander liegende Membranenträgerplatten (8) beim Zusammenfügen der Membranenträgerplatten (8) in benachbarter Position durchqueren.

9. Vorrichtung nach einem der Ansprüche 1 bis 8, **dadurch gekennzeichnet, dass** die Rückgewinnungsmittel (24, 24') der ersten Fraktion des Fluids in einem Rückgewinnungsraum (25), der zwischen einer Membran (10) und einer Seite der Membranenträgerplatte (8) abgegrenzt ist, Rippen (23) aufweisen, die im Wesentlichen in die Längsrichtung geradlinig sind und in der Nähe eines seitlichen Rands in eine Längsrichtung der Membranenträgerplatte (8) diskontinuierlich ausgerichtet sind, die untereinander Durchgangsschikanen des ersten Fluids und Führungsschikanen des ersten Fluids zu der Einheit von Ableitungskanälen der ersten Fraktion des Fluids bilden, wobei die auf der Seite der Membranenträgerplatte (8) vorstehenden geradlinigen und diskontinuierlichen Teile auch ein Halten der Membran (9), die den Rückgewinnungsraum (25) mit der Seite der Membranenträgerplatte (8) abgrenzt, sicherstellen.

10. Vorrichtung nach einem der Ansprüche 1 bis 9, **dadurch gekennzeichnet, dass** der Abstand zwischen den Membranenträgerplatten (8) und die Stärke der Fluidaufnahme- und Zirkulationszonen (13) zwischen zwei einander gegenüber liegenden Membranen (10), die von zwei benachbarten Membranen
trägerplatten (8) getragen werden, durch eines der folgenden Mittel eingestellt wird:
- Dichtring (9), der zwischen zwei aufeinander folgende Membranenträgerplatten eingefügt ist, der an seinem Rand, der mit dem peripheren Rand einer Membranenträgerplatte (8) in Berührung kommen soll, mindestens einen Teil (35) aufweist, der in Bezug auf eine Fläche der Dichtung parallel zu einer Membranenträgerplatte derart vorsteht, dass die Stärke der Dichtung entlang dem vorstehenden Teil (35) maximal ist,
- Zwischenlage aus Kunststoff zwischen den peripheren Teilen zweier benachbarter Membranenträgerplatten (8),
- vorstehende Rippe auf einem peripheren Teil einer Membranenträgerplatte.

11. Vorrichtung nach einem der Ansprüche 1 bis 10, **dadurch gekennzeichnet, dass** die periphere Dichtung (9), die dazu bestimmt ist, zwischen zwei Membranenträgerplatten (8) eingefügt zu werden, die die allgemeine Form eines rechteckigen Rahmens aufweist, einen zentralen Dichtteil (36) aufweist, der im Wesentlichen entlang einer Mittenlinie in Längsrichtung der Dichtung (9) in Form eines rechteckigen Rahmens derart angeordnet ist, dass Vibrationen der Membranen (10), die von den Membranenträgerplatten (8), zwischen welche die Dichtung (9) eingefügt ist, getragen werden, begrenzt oder verhindert werden.

12. Vorrichtung nach einem der Ansprüche 1 bis 11, die mindestens zwei Untereinheiten (2a, 2b, 2c) aus Membranenträgerplatten (8) mit im Wesentlichen rechteckiger Form aufweist, die derart angeordnet ist, dass die Längsrichtung der Membranenträgerplatten (8) senkrecht ist, **dadurch gekennzeichnet, dass** die starren Teile (16) neben einem seitlichen Längsrand der Membranenträgerplatte (8) in dem oberen Teil der seitlichen Längsränder der Membranenträgerplatten (8) liegen.

13. Vorrichtung nach einem der Ansprüche 1 bis 12, **dadurch gekennzeichnet, dass** sie mindestens zwei Untereinheiten (2a, 2b, 2c) aus Membranenträgerplatten (8) aufweist, die voneinander durch Trennplatten (4, 4a, 7b) getrennt und zwischen zwei Rückhalteendplatten (3a, 3b) zusammengefügt gehalten werden, wobei die Trennplatten von mindestens einer Öffnung (11, 11') zum Durchgehen des Fluids oder der zweiten Fraktion des Fluids an einem Längsende und von zwei Sätzen seitlicher Öffnungen (34) zum Durchgehen der zweiten Fraktion des Fluids in den Längsendteilen und in seitlichen Zonen der Trennplatten (4) derart durchquert werden, dass eine Montage in Serie der Untereinheiten (2a, 2b, 2c) möglich ist.

14. Vorrichtung nach Anspruch 13, **dadurch gekennzeichnet, dass** die Rückhalteplatten (3a, 3b) an jedem der Enden der Vorrichtung, die aus mindestens zwei Untereinheiten (2a, 2b, 2c) besteht, seitlich vorstehende Teile (50) zum Schutz der starren Teile (16) neben den seitlichen Rändern der Membranenträgerplatten (8) aufweisen, die bei dem Zusammenfügen der Membranenträgerplatten (8) und Untereinheiten der Trennvorrichtung (1) nebeneinander angeordnet werden.

15. Vorrichtung nach einem der Ansprüche 1 bis 14, **dadurch gekennzeichnet, dass** die Membranen (10) Filtermembranen sind, die Poren mit nanometrischen oder mikrometrischen Maßen aufweisen, wobei die erste Fraktion des Fluids ein Permeat ist, das durch Ultrafiltration oder Mikrofiltration erzielt wird, und die zweite Fraktion des Fluids ein Retentat ist.

16. Einsatz einer Vorrichtung nach einem der Ansprüche 1 bis 15 zum Trennen von Lösemittel und Farbe, die in einer industriellen Kataphorese-Lackieranlage umgesetzt wird.
